# EUROPEAN PATENT SPECIFICATION

(11) **EP 3 126 067 B1**
(45) Date of publication and mention of the grant of the patent: **01.01.2020**
(21) Application number: 15713893.4
(22) Date of filing: 02.04.2015
(51) Int. Cl.: B08B 1/00, B08B 3/02, B08B 5/04, B64C 39/02, A47L 1/00, E04G 23/00, F24S 40/20

(54) **AGCFDS: AUTOMATED GLASS CLEANING FLYING DRONE SYSTEM**
AGCFDS: AUTOMATISIERTES SCHEIBENREINIGENDES FLUGDROHNENSYSTEM
AGCFDS : SYSTÈME DE DRONE VOLANT AUTOMATISÉ POUR LE NETTOYAGE DE VERRE

(30) Priority: 03.04.2014 US 201461974966 P
(43) Date of publication of application: 08.02.2017
(73) Proprietor: Cleandrone, S.L., 08174 Valldoreix (Barcelona) (ES)
(72) Inventor: PARDELL, Ricard, 08197 Valldoreix (Barcelona) (ES)
(74) Representative: Malkomes, Niels Andreas
(86) International application number: PCT/EP2015/057338
(87) International publication number: WO 2015/150529

(56) References cited:
- WO-A2-2013/076711
- JP-A- 2003 026 097
- KR-A- 20030 025 662
- US-A1- 2009 120 653
- US-A1- 2012 083 945

## Description

### FIELD OF INVENTION

The present invention refers to cleaning drones, docking stations configured to operate with the cleaning drones, systems or installations comprising one or more cleaning drones, one or more docking stations and at least one ground control system controlling the cleaning operations, as well as as use of the cleaning drones in methods for cleaning surfaces such as photovoltaic panels or windows for example.

### BACKGROUND

Productivity of solar energy systems is negatively affected by soiling. In solar energy conversion, the loss mechanisms related to soiling are basically two: absorption and dispersion of photons in dust or dirt particles covering the surface of solar collectors. Regular cleaning of solar panels and heliostats, in its different technologies, is a necessary routine maintenance operation for solar energy plants, its periodicity and intensity depending on localised economic, geographic, climatologic and technical factors. The need for routine cleaning of solar plants can be a significant operation and maintenance cost.

If cleaning is necessary for non concentrated photovoltaic modules and solar thermal collectors, frequent cleaning is even more necessary for concentrated solar systems, both CSP (concentrated solar power) and CPV (concentrated photovoltaics). In those CPV systems using refractive primary optics the effects of soiling are larger than in flat PV (photovoltaic) panels, as the probability of a photon to reach the cell after being dispersed by a dirt particle is almost null, whether for flat PV panels there is a relatively high probability of a dispersed photon being rebound back to the cell. In CSP, heliostat reflectivity is particularly affected by soiling, as the direct beam is dispersed twice by dirt particles. For the same reason, CPV systems using reflective primary concentrators are also more affected by soiling than refractive CPV systems.

The photovoltaic (PV) market has expanded very much in the last years. It is expected that by 2015 a total global installed capacity of 185 GWp will be reached, meaning that an approximate glass surface of 132,000 Ha (326,179 acres) must be periodically cleaned worldwide. Installed PV capacity is expected to reach 545 GWp by 2020, having a glass surface of 389,000 Ha (961,239 acres). Present size of the CPV market is much smaller, in the order of 100 MW of total installed capacity, but it is expected to add a significant volume of installed capacity in the future, reaching 12.5 GW by 2020 with a glass surface of 3,900 Ha (9,637 acres). CSP is expected to reach a total installed capacity of 10 GW by 2015, and 150 GW by 2020 with a mirror surface of 75,000 Ha (185,329 acres). Therefore, by 2020 a total solar panel and mirror surface of 467,835 Ha (1.16 million acres) will have to be cleaned periodically. Altogether, this is a huge market for O&M companies, and cleaning solar panels or mirrors will be an increasingly important activity, estimated to involve 124 millions of men hours per year by 2020.

Also, water consumption in cleaning operations is a significant cost and it is environmentally detrimental to solar energy operations. Current consumption is estimated in 3.9 million cubic meters (3,161 acre feet) of water per year. 18.4 million cubic meters (14,917 acre feet) of water per year are expected to be consumed by 2020 if the current cleaning methods are still in use. It is obvious that water consumption by cleaning activities is even less acceptable in arid areas where water can be a scarce resource. So, it can be clearly seen the very large economic and environmental benefits of using a water efficient and fully automated cleaning system.

Apart from the obvious application of automated cleaning for solar energy systems, there are other many situations in which an automated flying cleaning drone can be beneficial. This is the case of large glazed buildings, like skyscrapers, where window cleaning operations pose safety risks and require expensive and heavy equipment. A cleaning system based on automated flying drones, like the proposed invention, would significantly reduce operational cleaning costs and be considerably safer.

KR 2003/0025662 A discloses a cleaner with a small-unmanned helicopter to prevent accidents by cleaning the outer wall or window of a high building accurately and promptly with using the small-unmanned helicopter. A cleaning device with a small-unmanned helicopter is composed of a helicopter body, a cylindrical bar connected to the helicopter body through a connecting shaft for cleaning, and a remote controller controlling the helicopter and the bar. An engine is installed in the helicopter, and a water tank having a water level sensor is installed in the bottom of the helicopter. An injection pipe is connected from the water tank to a water injection propeller, and an injection nozzle is mounted in the end of the injection pipe. Brush assemblies including flexible brushes are mounted in both ends of the bar and extended beyond the rotation range of a rotor. Accidents are prevented with cleaning the dangerous area by the unmanned helicopter.

Another cleaning device is disclosed in JP 2003/026097 A. Therein, a helicopter has a body, a main rotary wing installed in an upper part of the body, and rotating in a horizontal plane, and a tail rotary wing installed in a tail part extending from a rear part of the body, and can perform a hovering flight by remote control, and is characterized by having a means for keeping a distance between the body and the window surface of the building constant, and preventing the tail part from colliding with the window surface by rotating in the hovering flight, an arm part extending up to the outside of a turning radius of the main rotary wing toward the window surface from the body, and a cleaning tool installed on the tip of the arm part 7, and cleaning the window surface of the building.

WO 2013/076711 A2 relates to an effective, safe, time and labor saving aeropotic glass cleaner apparatus, depending mainly on a mini helicopter to move up/down opposite to the glass to be cleaned. Three apparatuses stored in each cabover truck container, that includes also the fluid supply tank, fluid pump, and batteries, in addition to a control panel, in the truck cabin, to monitor/control remotely the cleaning process. It further consists of a water distribution block on the ground, 2-way motor with pulleys releasing the fluid hoses and the electric/data cable to the mini helicopter, toproof mounted U-shaped frame with 2-way motor, and pulleys for releasing the safety ropes to the mini helicopter, a reciprocating cleaning brush with rinse/compress mechanism, cameras, distance sensors, wind meter, speed sensors, control unit, all to control the cleaning process of the apparatus which is capable to clean facades with protruded vertical parts, curving inwards or outwards.

US 2012/083945 A1 relates to a helicopter having a modular airframe, with multiple layers which can be connected easily, the layers which house the electronics (autopilot and navigation systems), batteries, and payload (including camera system) of the helicopter. The helicopter has four, six, and eight rotors, which can be easily changed via removing one module of the airframe. The helicopter allows for simple flight and usage by remote control, and non-remote control, users.

US 2009/120653 A1 discloses a Fire Suppression Delivery System, wherein the fire extinguishment encasements are modified to include a projectile airbrake to improve maneuverability, foam firefighting material encasement, and for direct application within marine vessels, including a sentinel encasement. The software security means of the System is enhanced to prevent unauthorized access to its data and software controlled functions.

### SUMMARY OF THE INVENTION

Our invention objective is to implement a low cost solution for the automated cleaning of large outdoors glazed areas. Its primary application is for the cleaning of large areas of PV (photovoltaic) panels and heliostats in solar plants, but it can also be used in other applications, like glass windows on commercial buildings. For large solar farms the ideal conditions exist to implement a completely automated cleaning operation, because access is restricted, the area is fenced, human presence is scarce, and topography and glass surfaces are well charted. We name this invention Automated Glass Cleaning Flying Drone System (AGCFDS).

The main envisioned application is in the cleaning of large glass surfaces, but the same cleaning system could be used to clean other smooth surfaces apart from glass, like aluminium, PMMA, PC, etc.

The core of this disclosure consists of a robotic small flying drone able of controlled vertical flight, based on rotating aerofoils as lifting means and having pusher propellers for improved horizontal flight and pushing/pulling force, and to which a glass cleaning device is attached. Also, an accurate 3d positioning system and optical recognition cameras and proximity sensors are integrated. We will thereafter refer to this specialised kind of drone as a cleandrone.

Cleandrone lifting rotors, pusher propellers and cleaning device will be powered by electric motors controlled by an embedded autopilot system, so having a completely electrical control and power train. A lithium-ion battery pack is the most preferred solution in order to provide electricity to the cleandrone power system. Current state of the art for lithium-ion batteries, offering around 200 Wh/kg energy densities, will typically limit each mission length to about 20 minutes.

One proposed solution to overcome this limitation is that the cleandrone main batteries are grouped together with cleaning solution and waste water tanks in a detachable cargo pack, so that each drone can swap its batteries quickly, expanding its operational availability. This solution is well coupled with the fact that a too large cleaning solution tank is not desirable, and therefore missions would be anyway limited by cleaning solution consumption. It is estimated that 100 cl of cleaning solution are needed to clean 70 m² of glass surface, and it seems feasible to construct a cleandrone able to clean this area in 20 minutes.

In any case, the proposed invention is not limited to the usage of lithium-ion batteries, and other kind of electrochemical batteries or other electricity sources may be used, without departing from the scope of the claims, like fuel cells using hydrogen, propane or other fuels, with energy densities around 600 Wh/kg or a hybrid power system, where a two or four stroke internal combustion engine runs an alternator to generate electricity, with even higher energy densities.

The main components of the AGCFDS are:
- a team of cleandrones, executing recognition and cleaning missions;
- several docking stations, where drones can charge batteries, refill cleaning solution and drop waste water; and
- a central ground control system coordinating drone missions and maintenance duties.

Preferred aspects of this invention relate to a cleaning drone based on a multi-copter flying platform comprising a plurality of sustentation rotors, a cleaning device protruding from the main body of the drone and a plurality of pusher propellers protruding from the main body of the done in a position being opposite to the protruding cleaning device, these pusher propellers being aligned at a substantially orthogonal angle in respect to the sustentation rotors in order to provide a pushing force for the cleaning device to act upon the surface to be cleaned, the cleaning drone further comprising a communications system, allowing it to receive commands and to send back responses to a remote controller, a geographical positioning system, allowing it to execute translation operations based on a known position, and a visual recognition system, allowing it to recognise visual features on the surface to be cleaned or on its immediate surroundings, wherein the sustentation rotors and pusher propellers are driven by electric motors which are fed by at least one electricity source, in accordance with claim 1. The electricity source can be selected from the group consisting of electric batteries, a fuel cell, a generator driven by a small piston engine, a thermo-photovoltaic fuel based generator.

In a preferred aspect, the cleaning device is protruding from the front side of the drone's main body and comprises at least two straight flexible squeegee blades being hold in place by an enclosure defining a cavity which progressively transforms its cross section from a flat rectangle corresponding to the gap left between the squeegee blades to a duct which connects in its end to a vacuum suction system, whereas at least one but not all of such squeegee blades has notches or holes on it which allow water and dirt to pass through them and be suctioned away by the vacuum suction system. Preferably, at least one squeegee blade incorporates a plurality of pressure sensors.

In another preferred aspect, the cleaning drone may further include a cleaning solution tank, wherein the cleaning device further includes spraying nozzles mounted below or above the squeegee blades, these nozzles being connected to said cleaning solution tank. Preferably, the cleaning drone may further include a waste water tank to which the vacuumed water and dirt mixture is disposed.

In a further preferred aspect, the at least one power source is at least one electric battery, in which the main batteries are allocated in a detachable cargo pack, and the drone includes also a buffer battery allowing it to operate when said cargo pack is detached. Preferably, the at least one power source is at least one electric battery, in which the main batteries, the cleaning solution tank and the waste water tank are allocated in a detachable cargo pack, the drone also including a buffer battery allowing it to operate when said cargo pack is detached.

A further aspect of the invention refers to a docking station configured to operate with a cleaning drone according to the invention, comprising a power source, a communications system, means for recharging or refilling drone's power source, means for making the cleaning device ready for a new cleaning process including the disposal of recollected dirt material and optionally providing fresh cleaning agents, in accordance with claim 8. Preferably, the docking station may further comprise means for allocating a used cargo pack and means for recharging batteries in said cargo pack in order to operate with a cleaning drone according to a preferred aspect of the invention. In another preferred aspect, the docking station according to the invention may further include a docking station waste water tank and a docking station clean solution tank, means to transfer drone waste water to said docking station waste water tank, means to recycle waste water from the docking station waste water tank and to transfer the recycled water to the docking station clean solution tank, optionally means to dispense and mix cleaning agents into the docking station clean solution tank, and means to refill the drone's cleaning solution from the docking station clean solution tank in order to operate with cleaning drone of another preferred aspect. Preferably, an osmotic filter is used to recycle waste water. Further, the docking station may further comprise means for allocating a used cargo pack, means for recharging batteries in the cargo pack, means for emptying the waste water tank in the cargo pack and means for refilling the cleaning solution tank in the cargo pack in order to operate with a cleaning drone according to another preferred aspect of the invention.

A further aspect of the invention refers to a cleaning system comprising one or more cleaning drones according to the invention, one or more docking stations according to the invention and a ground control system, said control system being configured to read charging status, current position, and other relevant information from said drones and docking stations, and being configured to send cleaning mission commands to said drones and to coordinate recharging, refuelling, emptying and reloading operations between said drones and said docking stations, in accordance with claim 13. Preferably, said drones and docking stations include Real Time Kinematic receivers and said ground control system includes a Real Time Kinematic base station, allowing for centimetric positioning of said drones and docking stations.

A further aspect of the invention refers to a cleaning method using a cleaning drone according to a preferred aspect of the invention, wherein a cleaning solution is sprayed on the glass surface and then the resulting cleaning solution and dirt particles mixture remaining on the glass surface is vacuumed up by the suction system, this process of spraying, squeegeeing and vacuuming being carried out continuously and simultaneously with a downward or upwards translation of the drone, wherein the translation sense will be upwards when spraying nozzles are placed above squeegee blades, while translation sense will be downwards when spraying nozzles are placed below squeegee blades, in accordance with claim 15.

### BRIEF DESCRIPTION OF THE DRAWINGS

The features of the present invention are defined by the claims and the advantages become more apparent from the detailed description set forth below when taken in conjunction with the drawings in which like reference characters identify corresponding elements in the different drawings. Corresponding elements may also be referenced using different characters.
Fig. 1 is an overall view of the main cleaning system components according to the disclosure comprising a cleaning drone docked on a docking station.
Fig. 2 shows a cleandrone according to the invention.
Figs. 3 and 4 show a cleaning device of the cleaning drone.
Fig. 5 shows a cross section of the cleaning system showing the cleaning operation.
Figure 6 shows the bottom side of the main body of a cleaning drone comprising a detachable cargo pack when said detachable cargo pack is not attached.
Figs. 7 and 8 are top and bottom views of a detachable cargo pack for a cleaning drone.
Fig. 9 shows the interior components of the detachable cargo pack of Figs. 7 and 8.
Figs. 10-12 show a docking station according to the invention.
Fig. 13 shows a schema explaining how the complete AGCFDS works.
Fig. 14 is a block diagram depicting a control system according to the disclosure and its interactions with the other components.
Fig. 15 shows how a cleandrone according to the invention may execute a cleaning mission.
Fig. 16 shows how a cleandrone according to the invention may execute a cleaning procedure on vertical or nearly vertical glass surfaces.
Fig. 17 shows a cleandrone according an alternative aspect modified to clean slightly inclined or nearly horizontal glass surfaces.
Fig. 18 shows how a cleandrone according to the invention may execute a cleaning stroke on slightly inclined glass surfaces.
Fig. 19 shows how a cleandrone according to the invention may execute a docking manoeuvre to pick up a detachable cargo pack.
Fig. 20 shows how a cleandrone according to the invention may execute a landing manoeuvre to release a detachable cargo pack.
Fig. 21 shows two alternative embodiments of a cleaning device according to the disclosure.

### ADVANTAGES

Main advantages of our invention are as follows. It can adapt to many different complex cleaning situations thanks to its freedom of movement in the three dimensions and visual recognition for accurate positioning. Cleaning speed can be faster than that of trained human cleaners, at the same time avoiding safety risks, and requiring much less equipment, while it has much lower operational costs when compared to manual cleaning operations. Transition between non adjacent surfaces will be very fast when compared to normal human operations. This is an obvious advantage when cleaning heliostats or solar panels mounted on tracking systems. It allows for real fully automated operation when compared to other automated cleaning systems which require the equipment to be manually moved between several areas of contiguous panels. Night operations can be executed if cleandrones are equipped with IR cameras, this being the most efficient cleaning schedule for solar farms, so that cleaning operations don't interfere with solar production and nocturnal dew may be used in order to minimize water consumption. It enables the possibility to execute very frequent unattended cleaning operations in remote solar PV plants and heliostat fields, at low cost. There is very low water utilisation, as the water is carefully dispensed and then recovered by the drone and recycled in the docking station. At the same time, the cleaning method doesn't erode the glass like a dry cleaning method would do. Lightweight and easy to transport equipment which could eventually be used by itinerant maintenance professionals on different cleaning applications.

### DESCRIPTION OF MAIN SYSTEM COMPONENTS

Herein follows a further description of system components:

### CLEANDRONE TEAM

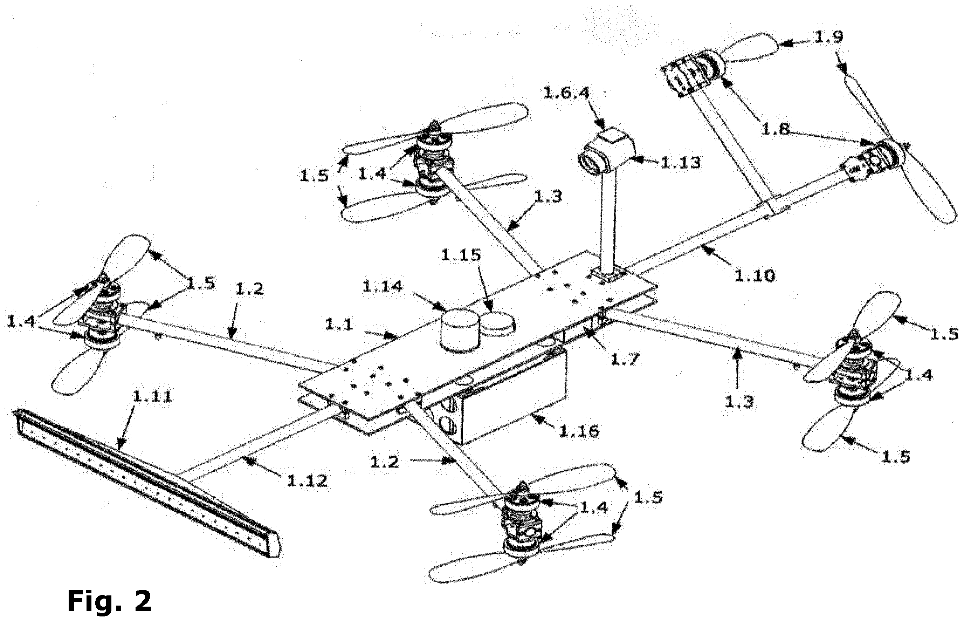

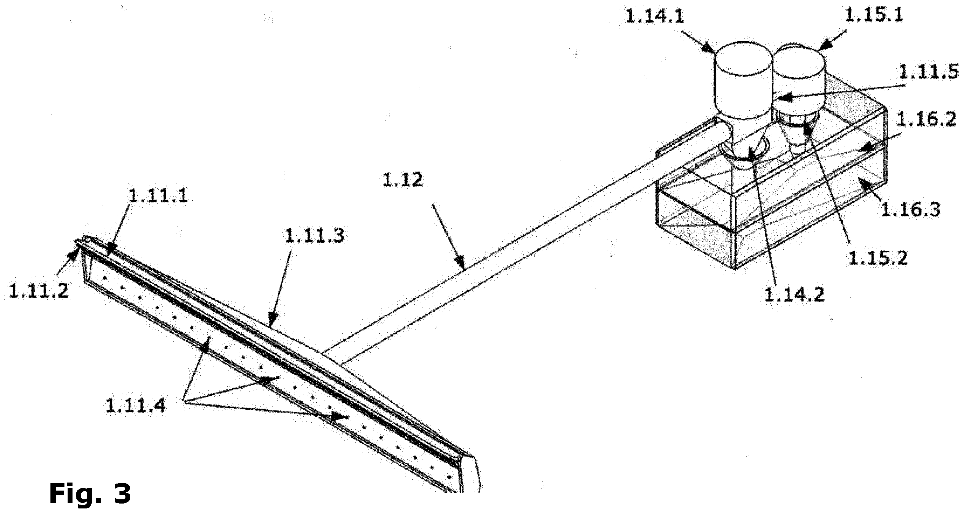

One or several cleandrones (figure 2), each including:
- Several lift generating rotors enabling controlled vertical flight.
- Pusher propellers in order to exert pressure on glass surfaces and execute cleaning strokes while keeping a horizontal attitude.
- An embedded control system, including:
   - An auto-pilot system, able to artificially stabilize the multi-copter and to execute flight commands coming from the control system. This system processes information coming from the following sensors:
      - Inertial measurement unit (IMU), including accelerometers, gyroscope and magnetometers for each axis.
      - A RTK (Real Time Kinematic) enabled receiver, offering highly accurate (in the below 0.1 m) positioning, based on the GPS system or a similar reference satellite constellation based global positioning system, like GLONASS or Galileo, or a local positioning system based on radio, IR or ultrasonic emitting beacons which would eventually facilitate indoors operations, or a combination of all previous systems.
      - Barometric altimeter.
      - Ultrasonic altimeter for final approximation.
   - An upper level control system responsible for mission execution and coordination with ground control system, including the following subsystems:
      - Computer vision for glass panel recognition and distance inference. In solar panel applications, as the panel geometry will be known beforehand, this problem is much simplified. For more complex situations, like when cleaning windows on buildings, a more sophisticated system using stereoscopic vision will be required.
      - Obstacle avoidance using proximity sensors based on radar, ultrasonic waves, IR or other body detection technology.
      - Execution and evaluation of cleaning operations.
   - Wireless bidirectional communications, which enable the cleandrone to provide telemetry data to the ground station and to receive mission commands from it.
- A cleaning device (figure 3) installed on drone's front section, at the end a protruding hollow mast. This device consisting of:
   - A cleaning squeegee composed of a pair of flexible blades, mounted in such a way that a gap is created between them, the ensemble enclosed in an air box, this air box connected through the hollow supporting mast to a suction system, the upper blade including strain sensors which will provide data to the upper level control system in order to infer the squeegee pressure exerted on the glass surface.
   - A waste water vacuum suction and separation system located in the main body, which will collect waste water into a tank placed below it.
   - A spraying device protruding from the drone bottom, able to spray at high pressure dirt loosening cleaning solution pumped from a tank located below the main body.
   - Optionally, a rolling cloth, brush, pad or similar wiping device placed below cleaning blade that would further loosen and remove some dirt. This device will include a selfcleaning mechanism in order to remove solid particles and rinse dirt.
- A camera located on top of an extension protruding from drone's back. The camera line of sight being aligned to the frontal cleaning device. Optionally, this single camera being substituted by two cameras, allowing for stereoscopic vision.

Optionally, an IR camera for night vision.
- If batteries are used as main power source:
   - A cargo pack including:
      - Main battery pack.
      - A cleaning solution tank.
      - A waste water tank.
   - A magnetic or mechanical release device able to pick and drop the cargo pack.
   - A buffer battery, enabling the cleandrone to fly to another docking station after releasing a cargo pack.
- Or, if a fuel cell or hybrid power system are used as main power source:
   - A cargo pack as aforementioned but were a fuel tank would replace main batteries.
   - Or, instead of an external cargo pack: internal fuel and cleaning solution tanks which can be externally refilled and an internal waste water tank which can be emptied.

### DOCKING STATIONS

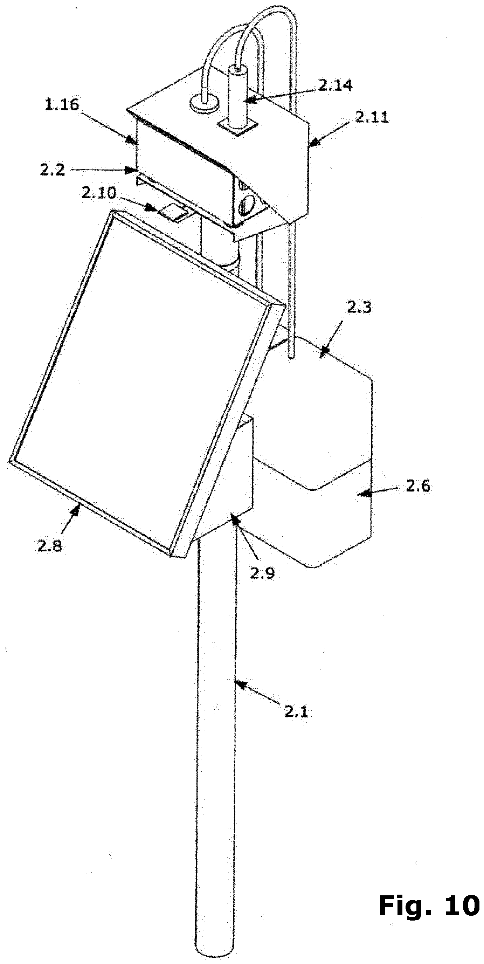

One or several docking stations (figure 10), each containing:
- Means to recharge drone batteries or to refuel cleandrones when using fuel cells or hybrid power systems.
   - When hot swappable batteries are used then at least two parallel docking stations are required, one to which the cleandrone unloads the used battery and the second holding a charged battery ready to be picked up. When drone finishes its operational flight it leaves the discharged battery in a first station and then flies to a second station using the buffer battery, where it picks up a charged battery.
   - This schema can actually be extended to n parallel docking stations depending on the relationship between battery charging time, mean operational time and required drone availability.
- Means to dispose waste water tank and reload cleaning mixture tank. If the cargo pack system is not used, this could actually be an independent station as these operations would be relatively fast.
- Means to recycle dirty residual water.
- In a preferred embodiment, cleandrones drop or pick cargo packs including batteries, cleaning solution and waste water, so that the docking station must have the necessary physical interfaces to deal with the cargo packs instead of the actual cleandrones.
- If internal fuel is used instead of hot swappable batteries, then the docking stations will include means to refuel the cleandrones.
- A solar panel and battery for autonomous power.
- An RTK receiver.

### GROUND CONTROL

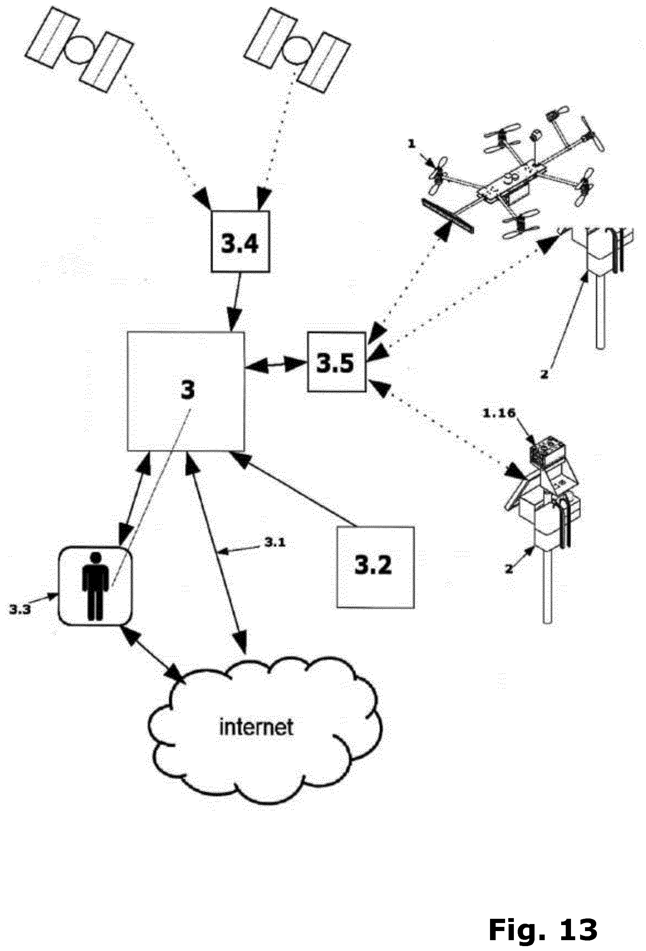

A ground control system (figure 13) with the following functions:
- Broadcasts RTK base signal.
- Logs meteorological data coming from local sensors: Wind speed, solar radiation, ambient and module temperatures, atmospheric pressure, relative humidity, etc.
- Obtains complementary data from internet: weather and solar radiation forecasts, satellite pictures, etc.
- Determines cleaning needs using images obtained from drones in recognition missions, solar plant monitoring, climatologic history, weather forecast and other information resources.
- Schedules and programs cleaning operations. A solar field for instance can be divided in areas, and cleaning operations can be rotated between the different areas.
- Coordinates several cleandrones and docking stations. Three kinds of primary missions can be assigned to drones: cleaning, recognition and transport. Other secondary missions (not directly related to cleaning) can be assigned, like module inspection, IR analysis or perimeter surveillance.
- Monitors battery charge and fluid levels in docking stations and cleandrones.
- Incidence management.
- Scheduling of maintenance tasks: replacement of damaged batteries, refilling of cleaning solution tanks, rinse or substitution of waste water cleaning systems, drone maintenance, etc.

### CLEANDRONE PREFERRED EMBODIMENT

The cleandrone preferred embodiment is in the form of an octocopter in X arrangement, with two superposed counter-rotating rotors on each of its four arms, as this is an easy to control multi-rotor architecture which is also redundant enough to allow the drone to return home or execute a controlled emergency landing in case of motor failure. Also, the cleandrone incorporates a pair of counter rotating pusher propellers on its tail, in order to allow the device to exert horizontal pushing or pulling forces on the cleaned surface while keeping a stable horizontal attitude.

The solution could also be implemented using other vertical flying architectures, like normal single rotor helicopter with tail rotor, counter-rotating twin rotors, V hexacopter, X quad, V octo, etc. In any case the rotor positions must be compatible with the cleaning device protruding in the front and the pusher propellers being positioned in the back, so that some multi-copter configurations like I quadcopter, I hexa, Y hexa, I octo or V octo are not so much suitable.

In a preferred embodiment hot swappable batteries, cleaning solution tank and waste water tank are arranged together in a detachable cargo pack, facilitating beginning and end of mission operations. When the drone has discharged its batteries and/or the cleaning fluid tank is emptied, it comes back to a free docking station where it drops the cargo pack and flies to a second docking station where it picks a ready cargo pack with recharged batteries, emptied waste tank and refilled cleaning solution tank.

The cleaning device angle of attack can be fixed or configurable, depending on the inclination of surfaces to be cleaned:
- For heliostat fields and PV or CPV panels on trackers, where the glass surfaces can be positioned vertically or close to 90 degrees from horizontal, and therefore also for building facades, the most convenient position for the cleaning device mast is to protrude horizontally from the front of the cleandrone. This is also the easiest to control configuration.
- For flat PV panel installations, where the PV panels will be normally at low inclination angles, between 5 and 40 degrees from horizontal, the cleaning device mast should be inclined downwards correspondingly, between 85 and 50 degrees.

### CLEANDRONE OPERATIONS

Operations can be fully automated, semi-automated or manual. For more complex situations a human operator may guide the drone during the translation and initial positioning of the drone on the glass panel. For large solar farms, the conditions exist to allow for a fully automated cleandrone operation which will be completely directed by the ground control system without requiring human intervention.

The ground control system will decide when the conditions exist to schedule cleaning operations, using long term scheduling criteria and a combination of short term local meteorological data and other relevant information, like weather forecasts or historical plant electrical production data. Then it will assign cleaning missions to cleandrones, each time assigning a specific area of solar panels or heliostats to be cleaned by each drone.

The usual cleandrone operational cycle will follow this schema: Ground control system assigns a cleaning mission to a cleandrone. With buffer battery charged, cleandrone flies to a docking station holding a ready cargo pack (main battery pack fully charged, cleaning solution tank full, waste tank empty) and picks it up. Then it flies to assigned solar panel area and executes cleaning procedure. When cleaning mission is finished, cleandrone flies back to a free docking station, drops empty cargo pack, and if another mission is assigned, flies again to a ready docking station to retrieve another fresh cargo pack.

### CLEANING VERTICAL GLASS SURFACES

For vertical surfaces the cleaning procedure is initiated in the following way: Drone arrives to the assigned solar panel area based on positioning system coordinates. It conducts a visual recognition of the area in order to identify the initial glass panel assigned. After this, the following actions go in sequence: Cleandrone flies to initial glass panel at low speed and it hovers in front of glass panel using visual recognition of panel frame.

Once the panel features have been identified, the drone flies slowly to the solar panel upper left corner, positioning its cleaning device above upper frame, and starts spraying cleaning solution. Then, it flies downwards, positioning squeegees top blade left tip inside solar panel's upper left corner. Keeping horizontal flight, it moves forward using pusher propellers until contact is sensed between the squeegee blades and the glass surface.

During the cleaning phase, the cleandrone will fly downwards until it reaches the glass panel bottom, executing a continuous cleaning stroke by simultaneously doing the following actions:
1. Spray cleaning solution at high pressure. This wets the surface and loosens the dirt
2. Water squeezing and recovery through suction system

Cleaning solution will be administered in such a way as to avoid excessive water consumption, trying to recover most of the liquid through the vacuum suction system. During its continuous downward movement the cleandrone will try to keep a horizontal attitude and a specific homogeneous pressure of the squeegee blades on the glass surface using its pusher propellers. After having reached the bottom of the glass panel an area has been cleaned which is as wide as the cleandrone squeegee.

The drone will repeat the previous sequence but this time starting from the upper edge of the glass panel and to the left of the previously cleaned area, slightly overlapping it, or, if the remaining unclean panel area width is smaller, adjusting the right tip of squeegee's top blade to the upper right corner of the glass panel. The cleandrone will proceed repeating this same sequence for each glass panel assigned within the current cleaning mission until it has cleaned all assigned panels or it has consumed its batteries or cleaning solution tank.

### CLEANING SLIGHTLY INCLINED GLASS SURFACES

As said before, cleandrones will require a specific physical configuration in order to be able to clean slightly inclined glass panels. In this case the visual recognition camera will have to be moved forward and the cleaning system mast inclined downwards in order to keep an optimal cleaning angle. Instead of using its pusher propellers to push the squeegees towards the glass, a cleandrone will use a combination of its own weight and/or the force of its main rotors pushing downwards and its tail propellers pulling backwards in order to obtain similar results as described before for vertical glass panels.

### CLEANDRONE TEAMING ALTERNATIVES

The cleaning drone can also be seen as the basis for a cleaning system drone team, an option being to divide its functions between several more specialized drones. For instance, an alternative embodiment of the present invention may consist in a team of three drones working in sequence:
1) Spraying drone
2) Whipping drone
3) Squeezing drone.

Alternatively, responsibilities may be divided between two drones:
1) Spraying-whipping drone
2) Squeegeeing drone.
Or:
1) Spraying drone
2) Whipping-squeegeeing drone.

Waste water will be a mixture of water, detergent and dirt particles, and this is recovered into the waste tank, so that it can be disposed of in a docking station where it can be recycled in areas were water is critically scarce, therefore reducing the total water consumption during cleaning operations. As an alternative to the wet cleaning system described so long, a dry cleaning device using rotating brushes can be used instead in areas were no water consumption is acceptable. In this case the cargo pack would only hold the battery pack.

### DETAILED DESCRIPTION OF A PREFERRED EMBODIMENT

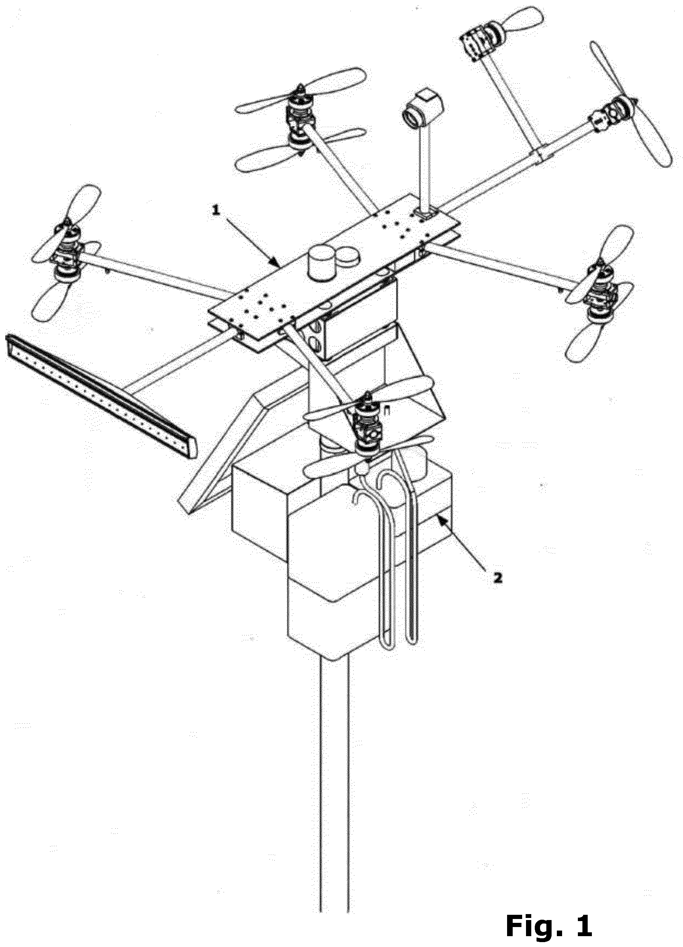

Herein follows a detailed description of a preferred embodiment of our invention. Figure 1 is an overall view of main system components: a cleaning drone 1, which we will refer as cleandrone 1 from now onwards, docked on a docking station 2. Figure 2 shows a cleandrone 1 and its components.

Cleandrone 1 is based on a multi-copter platform, this being a main body 1.1 from which a pair of fore arms 1.2 and a pair of aft arms 1.3 protrude, at the tip of each arm electric motors 1.4 and lifting rotors 1.5 are mounted on its upper and bottom sides, so that there is a pair of coaxial counterrotating rotors at the end of each arm. Control system 1.6 and buffer battery 1.7 are mounted on main body 1.1.

Control system 1.6 includes autopilot system 1.6.1, inertial measurement unit 1.6.2, altimeter 1.6.3, cleandrone RTK receiver 1.6.4, upper control system 1.6.5 and radio link 1.6.6. Inertial measurement unit 1.6.2 includes three axis accelerometer 1.6.2.1, gyroscope 1.6.2.2 and magnetometer 1.6.2.3. These sensors are used to determine attitude and bearing.

Cleandrone 1 further includes an additional pair of electric motors 1.8 driving non coaxially mounted counter-rotating pusher propellers 1.9 located on tail section 1.10 protruding backwards between aft arms 1.3 and a cleaning device 1.11 located at the end of hollow mast 1.12 protruding forwards between forearms 1.2. Cleandrone 1 further includes: main camera 1.13 mounted on top of main body 1.1, having its line of sight aligned to frontal cleaning device 1.11, water suction system 1.14, water pumping system 1.15 and detachable cargo pack 1.16. Detachable cargo pack 1.16 includes main batteries 1.16.1, cleaning solution tank 1.16.2 and waste water tank 1.16.3. Visual features 1.16.4 are included on the top surface of cargo pack 1.16.

Cleandrone 1 also includes primary downwards looking camera 1.17 for visual recognition of visual features 1.16.4, to guide landing manoeuvres, a primary downwards looking proximity sensor 1.18, for final proximity control during landing, primary electromagnetic attachment device 1.19, to grasp/release cargo pack 1.16, and cleandrone electric connection socket 1.20.

Detachable cargo pack 1.16 further includes: top permanent magnets 1.16.5, cleaning solution socket 1.16.6, waste water socket 1.16.7 and electric connection plug 1.16.8 on its top side and electric connection socket 1.16.9 on its bottom side. Finally, detachable cargo pack 1.16 also includes a secondary downwards looking camera 1.16.10 for visual recognition of landing visual features 2.2.2 and a secondary downwards looking proximity sensor 1.16.11.

Electric connection plug 1.16.8 plugs into cleandrone electric connection socket 1.20, establishing electrical and signal connections between cleandrone main body 1.1 and detachable cargo pack 1.16. This allows cleandrone 1 to draw power from main batteries 1.16.1 and to use secondary downwards looking camera 1.16.10, secondary downwards looking proximity sensor 1.16.11 and secondary electromagnetic attachment device 1.16.12 in order to conduct landing operations when detachable cargo pack 1.16 is attached to main body 1.1.

Primary downwards looking proximity sensor 1.18 and secondary downwards looking proximity sensor 1.16.11 can be based on radar, ultrasonic waves or IR light. Primary electromagnetic attachment device 1.19 and secondary electromagnetic attachment device 1.16.12 use electro-permanent magnets. Electro-permanent magnets have the advantage of not consuming electric power when magnetically active and only consuming power when magnetically deactivated. Magnets in primary electromagnetic attachment device 1.19 are coincident with top permanent magnets 1.16.5 on top of detachable cargo pack 1.16. When primary electromagnetic attachment device 1.19 is active it attracts top permanent magnets 1.16.5 on detachable cargo pack 1.16 effectively attaching detachable cargo pack 1.16 to main body 1.1. Magnets in secondary electromagnetic attachment device 1.16.12 are coincident with landing permanent magnets 2.2.1 on top of landing platform 2.2. When secondary electromagnetic attachment devices 1.16.12 is active it attracts cleandrone 1 to landing permanent magnets 2.2.1 on top of landing platform 2.2, effectively attaching cleandrone 1 to docking station 2.

The system is designed so that, eventually, a cleandrone 1 without detachable cargo pack 1.16 could use primary electromagnetic attachment device 1.19 for direct attachment to landing platform 2.2. Also, in an emergency, a cleandrone 1 attached to a cargo pack 1.16 could land on top of another cargo pack 1.16 already occupying a docking station 2.

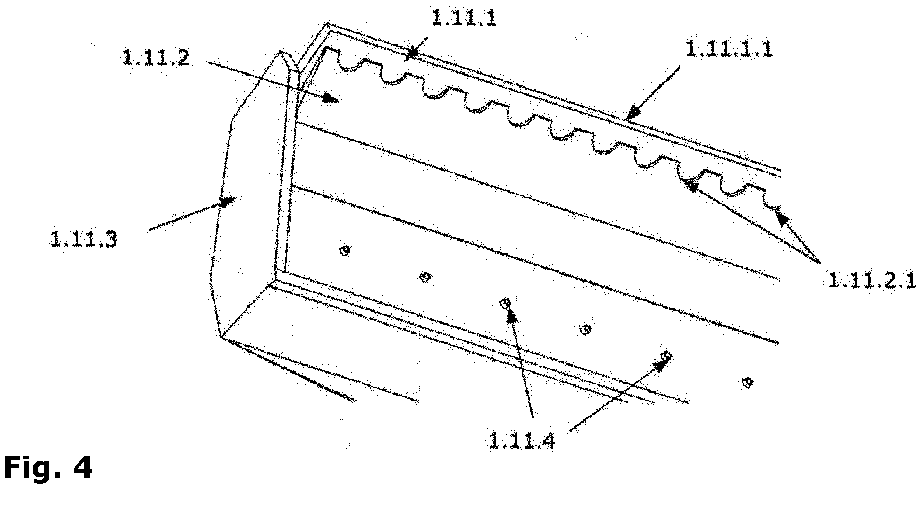

Figures 3 and 4 show cleaning device 1.11 and related components in detail. Cleaning device 1.11 consists of a pair of squeegee blades 1.11.1 and 1.11.2, both being hold in place by air box 1.11.3, which is itself connected in its rear side with hollow mast 1.12, hollow mast 1.12 being connected to water suction system 1.14. The interior cavities of air box 1.11.3, hollow mast 1.12 and water suction system 1.14 are connected in such a way as to constitute a continuous single air cavity which is open in its front in the space enclosed between top squeegee blade 1.11.1, bottom squeegee blade 1.11.2 and the right and left sides of air box 1.11.3.

Top squeegee blade 1.11.1 incorporates pressure sensors 1.11.1.1. Bottom squeegee blade 1.11.2 incorporates notches 1.11.2.1 which allow water to pass through them to the inside of air box 1.11.3. Cleaning device 1.11 also includes spraying nozzles 1.11.4 mounted below air box 1.11.3, these nozzles being connected to water line 1.11.5 coming from water pump 1.15. Water line 1.11.5 passes through air/water separator 1.14.2 and runs inside hollow mast 1.12.

Water suction system 1.14 is constituted by vacuum generator 1.14.1 drawing air from air/water separator 1.14.2. Air/water separator 1.14.2 is a cavity having three openings: Horizontal opening 1.14.2.1 connected to hollow mast 1.12, upper opening 1.14.2.2 connected to vacuum generator 1.14.1 and lower opening 1.14.2.3 connected to waste water drain plug 1.14.3. A traverse wall 1.14.2.4 crosses the upper part of the cavity. Water pumping system 1.15 is constituted by water pump 1.15.1 connected in one side to cleaning solution suction plug 1.15.2 and in the other side to water line 1.11.5. When detachable cargo pack 1.16 is attached to cleandrone 1, waste water drain plug 1.14.3 passes through waste water socket 1.16.7 on top of waste water tank 1.16.3 and cleaning solution suction plug 1.15.2 passes through cleaning solution socket 1.16.6 and dips into the bottom of cleaning solution tank 1.16.2.

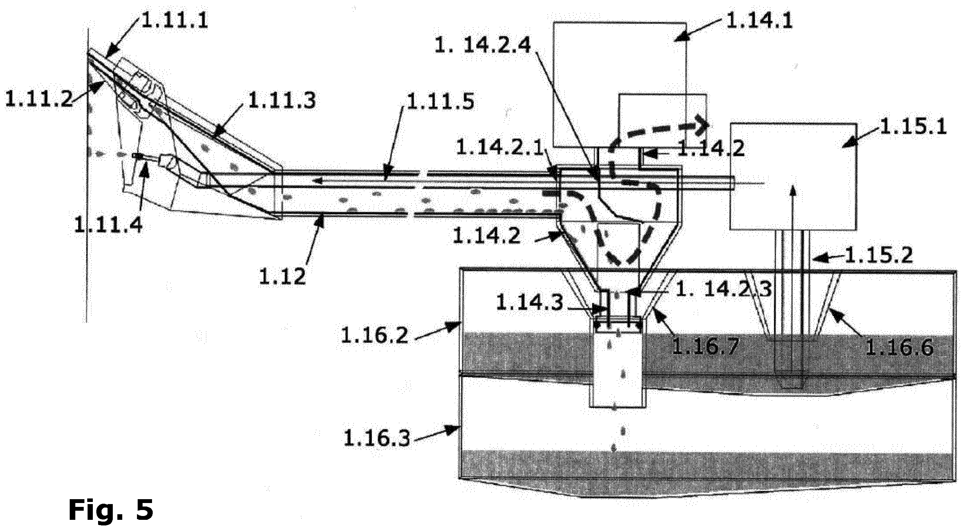

Figure 5 shows a cross section depicting the operation of the cleaning system: Cleaning solution is sucked through cleaning solution suction plug 1.15.2, pumped by water pump 1.15.1 through water line 1.11.5 and sprayed over the glass surface by spraying nozzles 1.11.4. Dirt on the glass surface is loosened by the impact of cleaning solution droplets. The resulting cleaning solution and dirt particles mixture will mostly remain on the glass surface, from where it is vacuumed up by suction system 1.14 drawing an air and waste water mixture though notches 1.11.2.1 on bottom squeegee blade 1.11.2. Any remaining waste water droplets are wiped away by top squeegee blade 1.11.1.

During this operation cleandrone 1 follows a flight trajectory such that cleaning device 1.1 remains at a proper angle from glass surface and pressure is exerted on the glass surface by a combination of cleandrone 1 own weight and forces from lifting rotors 1.5 and pushing propellers 1.9. Contact pressure between squeegee blade 1.11.1 and glass surface is controlled through pressure sensors 1.11.1.1.

Vacuumed up waste water and air mixture will run through hollow mast 1.12, waste water droplets falling to the bottom of hollow mast 1.12, and will be drawn to air/water separator, where traverse wall 1.14.2.4 encloses the upper part of the cavity, forcing the air/water mixture coming from cleaning device 1.11 to follow a S shaped path inside air/water separator 1.14.2 and causing the final separation by gravity of most waste water droplets remaining in the air flow, this air flow being finally evacuated by vacuum generator 1.14.1. Waste water is collected at the bottom of air/water separator 1.14.2 from where it falls through drain plug 1.14.3 into waste water tank 1.16.3.

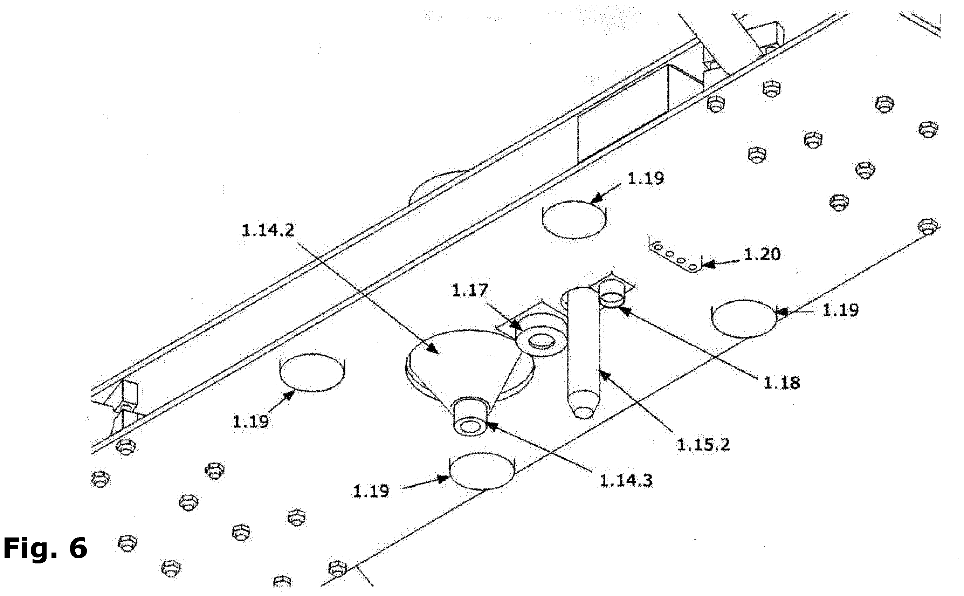

Figure 6 shows the bottom side of main body 1.1 when detachable cargo pack 1.16 is not attached. Primary downwards looking camera 1.17 is used for optical flow and visual recognition during landing operations together with proximity sensor 1.18.

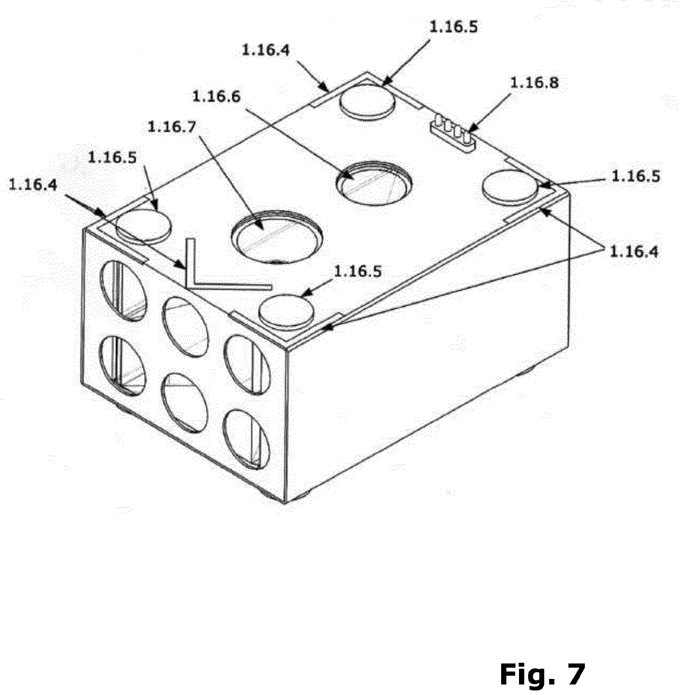

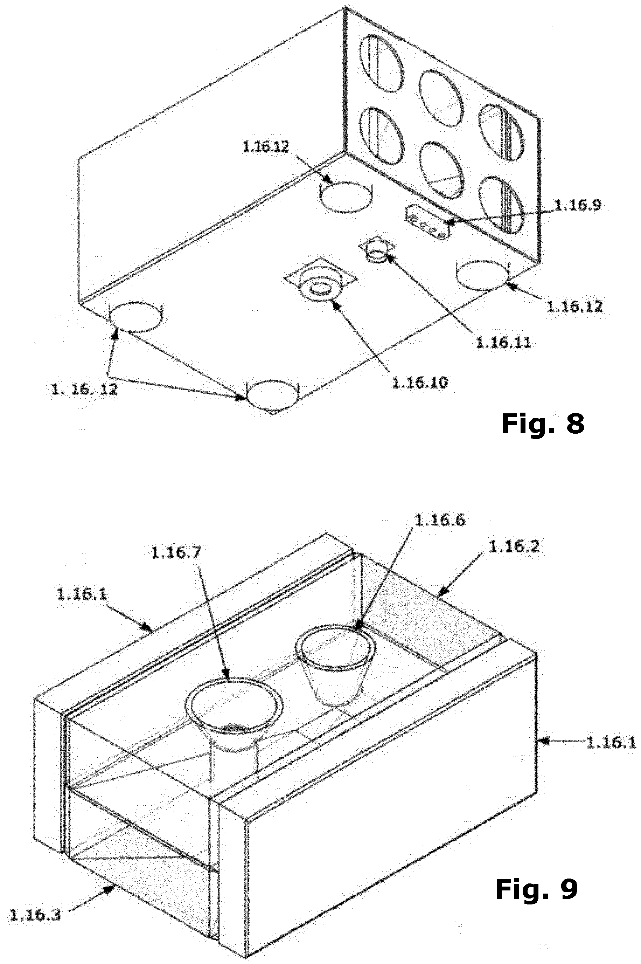

Figures 7 and 8 are top and bottom views of detachable cargo pack 1.16. Figure 9 shows the interior components of detachable cargo pack 1.16. When a cleandrone 1 approaches a detachable cargo pack 1.16 it will use visual features 1.16.4 as a guidance reference and will conduct a rendezvous manoeuvre with the objective of plugging cleaning solution suction plug 1.15.2 into cleaning solution socket 1.16.6 and waste water drain plug 1.14.3 into waste water socket 1.16.7. The docking manoeuvre is helped by the conical shapes of both sockets and plugs.

At the final stage of the docking manoeuvre, cleandrone 1 will reactivate its primary electromagnetic attachment device 1.19, attracting top cargo magnets 1.16.5, thus effectively attaching detachable cargo pack 1.16 to main body 1.1. When executing a landing manoeuvre with a detachable cargo pack 1.16 attached to main body 1.1, cleandrone 1 uses secondary downwards looking camera 1.16.10, secondary proximity sensor 1.16.11 and secondary electromagnetic attachment device 1.16.12 for landing manoeuvres.

As it can be seen, a preferred embodiment is based on the concept of a detachable cargo pack including cleaning fluids and batteries. This allows cleandrone 1 to release a used detachable cargo pack 1.16 on a free docking station 2 and then fly using buffer battery 1.7 to another docking station 2 to pick up a reloaded detachable cargo pack 1.16. By using this system on several docking stations 2 and cargo packs 1.16, cleandrone 1 downtime can be reduced to zero when the number of cargo packs 1.16 and docking stations 2 per cleandrone 1 equals the ratio between battery charging time and mission time.

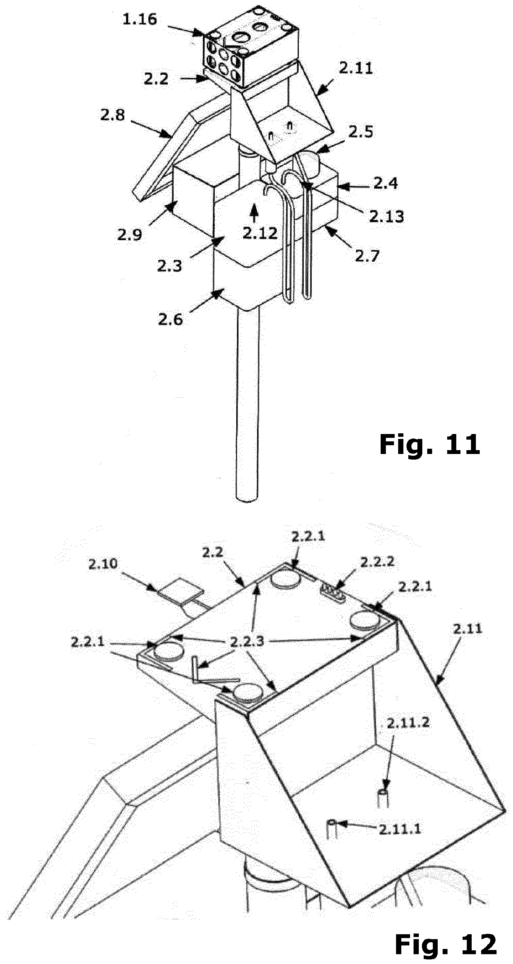

Figures 10, 11 and 12 show a docking station 2. Docking station 2 is constituted by a vertical mast 2.1 planted on the ground, on top of which landing platform 2.2 is mounted. It can hold one detachable cargo pack 1.16, incorporating means to recharge main batteries 1.16.1, to refill cleaning solution tank 1.16.2 and to empty waste water tank 1.16.3. Landing platform 2.2 includes landing magnets 2.2.1, a landing electric connection plug 2.2.2 and landing visual features 2.2.3 for visual recognition by cleandrone 1 during landing. Docking station 2 further comprises: station waste water tank 2.3, water recycling system 2.4, detergent tank 2.5, clean water tank 2.6, station cleaning solution tank 2.7, solar PV panel 2.8, station battery 2.9, station RTK receiver 2.10, refilling cover 2.11, suction pump 2.12, impulsion pump 2.13 and solenoid 2.14.

Landing electric connection plug 2.2.2 plugs into electric connection socket 1.16.9 at the bottom of detachable cargo pack 1.16, establishing an electrical connection between station battery 2.9 and main batteries 1.16.1.

Refilling cover 2.11 includes waste water probe 2.11.1 and cleaning solution filling plug 2.11.2 which are connected through flexible pipes to suction pump 2.12 and impulsion pump 2.13, respectively. It pivots on a hinge besides and below landing platform 2.2. It can be in one of two positions: deployed or retracted.

When a cleandrone 1 has released a detachable cargo pack 1.16 on top of landing platform 2.2, detachable cargo pack 1.16 is firmly attached to permanent landing magnets 2.2.4 through secondary electromagnetic attachment device 1.16.12. Refilling cover 2.11 is deployed by servo motors which rotate it about a hinge placing it above detachable cargo pack 1.16 in such a way that waste water probe 2.11.1 is situated over waste water socket 1.16.7 and cleaning solution filling plug 2.11.2 fits into cleaning solution socket 1.16.6. As soon as the cover is deployed, solenoid 2.14 pushes waste water probe 2.11.1 to the bottom of cleaning solution tank 1.16.2. Waste water tank 1.16.3 is emptied through waste water probe 2.11.1 by suction pump 2.12 which transfers waste water into station waste water tank 2.3. Cleaning solution tank 1.16.2 is refilled through filling plug 2.11.2 by impulsion pump 2.13 transferring cleaning solution from station cleaning solution tank 2.7.

Water recycling works in the following way: waste water in station waste water tank 2.3 is processed by water recycling system 2.4, where solids, detergent and other residues are filtered out. Filtered water is stored in clean water tank 2.6 and is mixed in small batches with detergent from detergent tank 2.5 into station cleaning solution tank 2.7. As soon as cleaning solution tank 1.16.2 is full and waste tank 1.16.3 is empty, refilling cover 2.10 is retracted. As soon as main batteries 1.16.1 are fully charged, detachable cargo pack 1.16 will be ready for pick-up.

Figure 13 shows a schema explaining how the complete AGCFDS works. In this and following figures, dashed lines denote movement, dotted lines denote wireless communication and continuous lines denote wired communication. Ground control system 3 receives satellite pictures, meteorological forecast information and other data from internet connection 3.1 and local real time meteorological and solar radiation data from local weather station 3.2. The system interacts with human operators 3.3 using local communications or through internet connection 3.1. Ground control system 3 contains or is connected to RTK base station 3.4, allowing for centimetre accurate positioning of cleandrones 1 and docking stations 2.

Ground control system 3 uses radio system 3.5 for bidirectional communication with cleandrones 1 and docking stations 2. RTK base signal (GPS satellite carrier signal phase) is broadcasted using radio system 3.5. Radio system 3.5 will typically operate in the UHF 450 MHz or 900 MHz bands. Ground control system 3 can schedule three kinds of primary missions to cleandrones: cleaning, recognition or transport missions. Ground control system 3 also monitors the status of docking stations 2 and cargo packs 1.16 being held by those. Ground control system 3 schedules cleaning missions based on information gathered from several sources, including recognition missions executed by cleandrones 1 in order to evaluate soiling degree of glass panels. When possible, cleaning operations will be conducted between dusk and dawn.

Docking stations 2 can be placed at convenient locations spread across a large solar farm, in order to optimize operational time of cleandrones. Transport missions may be necessary in order to move cargo packs 1.16 to a central refurbishing and maintenance base for better convenience of human operators 3.3. Finally, ground control system 3 could also use cleandrones 1 to execute other kind of secondary missions, like perimeter security surveillance, module/mirror inspection or IR imaging of PV modules in order to locate hot spots.

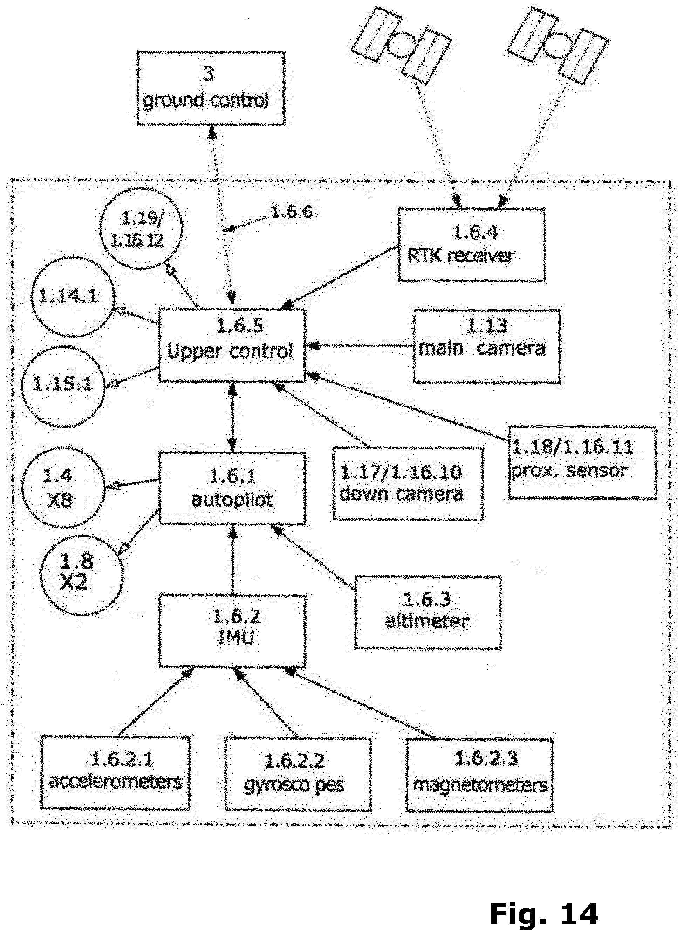

Figure 14 is a block diagram depicting control system 1.6 and how it interacts with other components. In this diagram rectangles denote subsystems and sensors, circles denote motors and solenoids and arrows denote information and control flow. Upper control system 1.6.5 keeps bidirectional communication with ground control 3 through radio link 1.6.6. Upper control system 1.6.5 receives orders from ground control 3 and sends back acknowledgment and monitoring information, including images. Images from main camera 1.13 are used for visual recognition of glass panel features and dimensions. This visual information together with accurate position information obtained from RTK receiver 1.6.4 and from inertial measurement unit 1.6.2 allows cleandrone 1 to navigate around and above glass surfaces and identify assigned glass areas to be cleaned.

Another important function of upper control system 1.6.5 is to direct docking and landing operations which require high accuracy, fast response and complex coordination. For these landing operations the main inputs are images from primary downwards looking camera 1.17 or secondary downwards looking camera 1.16.10 and primary downwards looking proximity sensor 1.18 or secondary downwards looking proximity sensor 1.16.11, which help accurately determine attitude, bearing and distance to a landing platform 2.2 or a detachable cargo pack 1.16, on top of a docking station 2. Upper control system 1.6.5 also activates and deactivates primary electromagnetic attachment device 1.19 (on docking/undocking operations) or secondary electromagnetic attachment device 1.16.12 (on landing/lift-off operations). Another upper control function is to start or stop vacuum generator 1.14.1 and water pump 1.15.1 in order to initiate or finish cleaning operations.

Upper control system 1.6.5 sends flight commands to autopilot system 1.6.1, which is responsible of flight control. It executes flight commands using inputs from inertial measurement unit 1.6.4 and altimeter 1.6.3. Inertial measurement unit 1.6.4 determines cleandrone's flight attitude (yaw, pitch and roll) and bearing. Altimeter 1.6.3 is used for altitude correction. Autopilot system 1.6.1 drives motors 1.4 and 1.8, generating lifting and pushing/pulling forces.

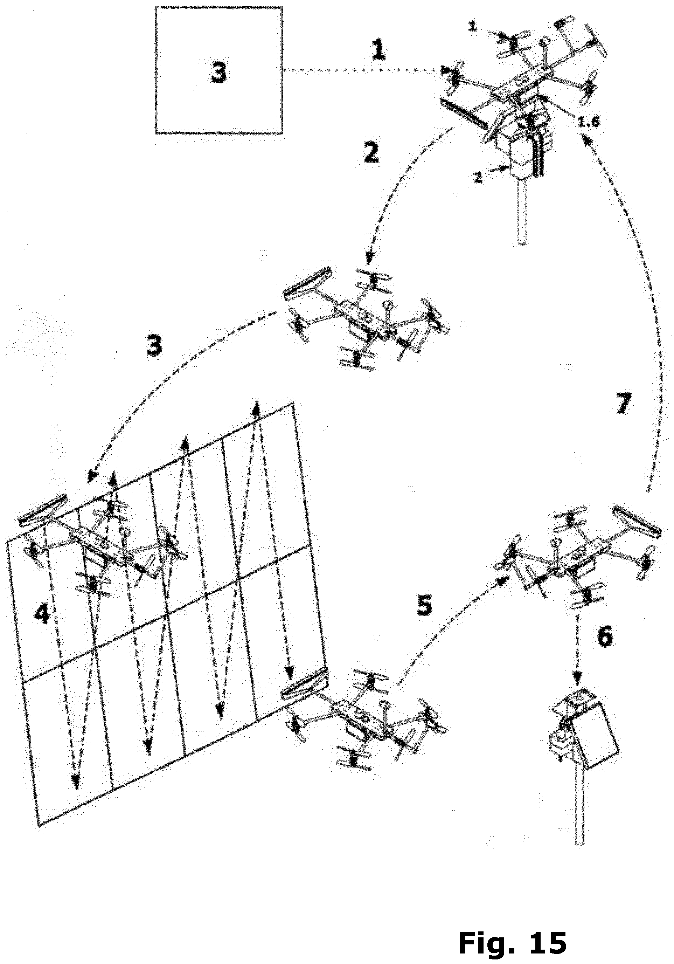

Figure 15 shows how cleandrone 1 executes a cleaning mission. The usual cleandrone operational cycle will follow this sequence:
1. Ground control system 3 assigns a cleaning mission to a cleandrone 1.
2. At this point, cleandrone 1 will be typically idle and attached to a ready detachable cargo pack 1.16 (main batteries 1.16.1 charged, cleaning solution tank 1.16.2 full, waste water tank 1.16.3 empty) standing on top of a docking station 2.
3. Cleandrone 1 flies to an assigned solar panel area.
4. Cleandrone 1 executes cleaning procedure.
5. Cleandrone 1 flies to a free docking station 2.
6. Cleandrone 1 lands on landing platform 2.2 and releases empty detachable cargo pack 1.16.
7. If another mission is assigned: using buffer battery 1.7, cleandrone 1 flies to a ready docking station 2 holding a ready cargo pack 1.6, lands on top of ready cargo pack 1.16 and attaches to it using primary electromagnetic attachment device 1.19.

When operations are finished, ground control system 3 will direct cleandrones 1 to land on free docking stations 2.

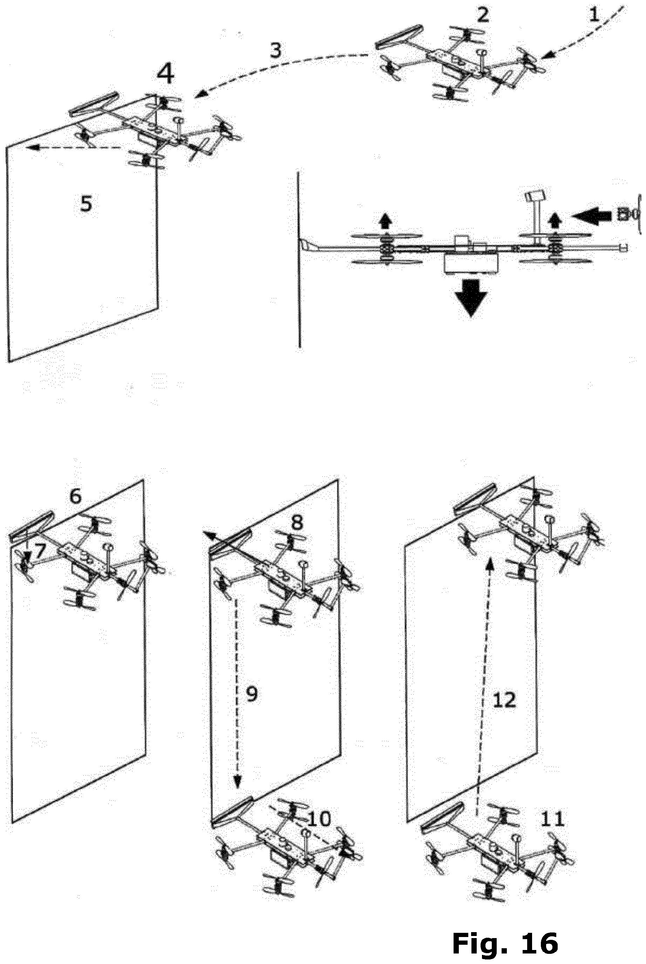

Figure 16 shows how cleandrone 1 executes a cleaning procedure on vertical or nearly vertical glass surfaces:
1. Cleandrone 1 arrives to the assigned solar panel area following RTK positioning system coordinates.
2. Using video from main camera 1.13, cleandrone 1 executes visual recognition of the area in order to identify initial glass panel.
3. Cleandrone 1 flies towards glass panel at low speed.
4. Cleandrone 1 hovers in front of glass panel, using video from main camera 1.13 for visual recognition of glass panel frame features.
5. Cleandrone 1 slowly flies to upper left corner of glass panel.
6. Cleandrone 1 positions cleaning device 1.11 above upper left corner of glass panel and starts spraying cleaning solution using spraying nozzles 1.11.4.
7. Cleandrone 1 flies downwards positioning top squeegee blade 1.11.1 left tip inside glass panel's upper left corner.
8. Keeping horizontal flight attitude, cleandrone 1 moves forward using pusher propellers 1.9 until contact between top squeegee blade 1.11.1 and glass surface is sensed by pressure sensors 1.11.1.1.
9. Cleandrone 1 moves downwards thanks to its own weight by reducing speed of lifting rotors 1.5 while keeping an even pressure on the glass surface of top squeegee blade 1.11.1 using pusher propellers 1.9. Cleandrone 1 uses acceleration of right or left pusher propellers 1.9 in order to increase pressure on the right or left side of top squeegee blade 1.11.1. In this way, cleandrone 1 can execute a continuous cleaning stroke from top to bottom of glass panel.
10. When bottom of glass panel is reached, cleandrone 1 stops pusher propellers 1.9 and starts them in reverse rotation sense, pulling cleandrone 1 backwards, away from the glass panel.
11. After having reached the bottom of the glass panel, an area has been cleaned which is as wide as the width of top squeegee blade 1.11.1.
12. Cleandrone 1 will repeat sequence 3-11, but this time starting from the upper edge of the glass panel and to the left of the previously cleaned area, slightly overlapping it, or, if the remaining unclean panel area width is smaller, adjusting the right tip of the squeegees to the upper right corner of the glass panel.
13. Cleandrone 1 will proceed repeating this cleaning sequence for each glass panel assigned within the current cleaning mission until it has cleaned all assigned panels or it has consumed main batteries or cleaning solution tank.

In solar farm cleaning applications, where the geometry, size and position of solar panels or mirrors is well known beforehand, a single main camera 1.13 is enough for distance inference based on images. On other more complex situations, like cleaning glass surface on buildings, a stereoscopic vision system will be necessary, so that a pair of parallel cameras would substitute main camera 1.13.

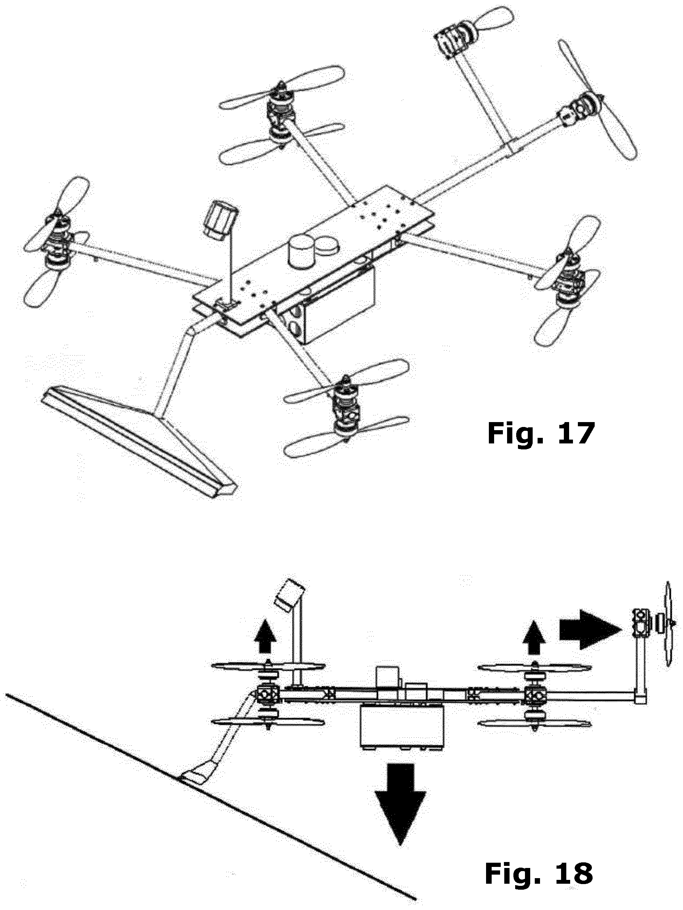

Figure 17 shows a cleandrone 1 modified to clean slightly inclined or nearly horizontal glass surfaces. In this case, cleaning device 1.11, hollow mast 1.12 and main camera 1.13 must be inclined downwards in order to keep an optimal cleaning angle respect to the glass surface.

Figure 18 shows how cleandrone 1 executes a cleaning stroke on slightly inclined glass surfaces. Cleaning procedure for slightly inclined glass surfaces is as follows:
1. Cleandrone 1 arrives to the assigned solar panel area following RTK positioning system coordinates.
2. Using video from main camera 1.13, cleandrone 1 executes visual recognition of the area in order to identify initial glass panel.
3. Cleandrone 1 flies towards glass panel at low speed.
4. Cleandrone 1 hovers above glass panel, using video from main camera 1.13 for recognition of glass panel frame features.
5. Cleandrone 1 slowly flies to upper left corner of glass panel.
6. Cleandrone 1 positions cleaning device 1.11 above upper left corner of glass panel and starts spraying cleaning solution using spraying nozzles 1.11.4.
7. Cleandrone 1 flies backwards and downwards, positioning top squeegee blade 1.11.1 left tip inside glass panel's upper left corner.
8. Keeping horizontal flight attitude, cleandrone 1 moves downwards until contact between flexible squeegees 1.11 and glass surface is sensed by pressure sensors 1.11.1.1.
9. Cleandrone 1 moves downwards thanks to its own weight and backwards thanks to pusher propellers 1.9 running in reverse rotation sense. In this way, cleandrone 1 can execute a continuous cleaning stroke from top to bottom of glass panel.
10. When bottom of glass panel is reached, cleandrone 1 stops pusher propellers 1.9 and flies upwards, away from the glass panel.
11. After having reached the bottom of the glass panel, an area has been cleaned which is as wide as the width of top squeegee blade 1.11.1.
12. Cleandrone 1 will repeat sequence 3-11, but this time starting from the upper edge of the glass panel and to the left of the previously cleaned area, slightly overlapping it, or, if the remaining unclean panel area width is smaller, adjusting the right tip of the squeegees to the upper right corner of the glass panel.
13. Cleandrone 1 will proceed repeating this cleaning sequence for each glass panel assigned within the current cleaning mission until it has cleaned all assigned panels or it has consumed main batteries or cleaning solution tank.

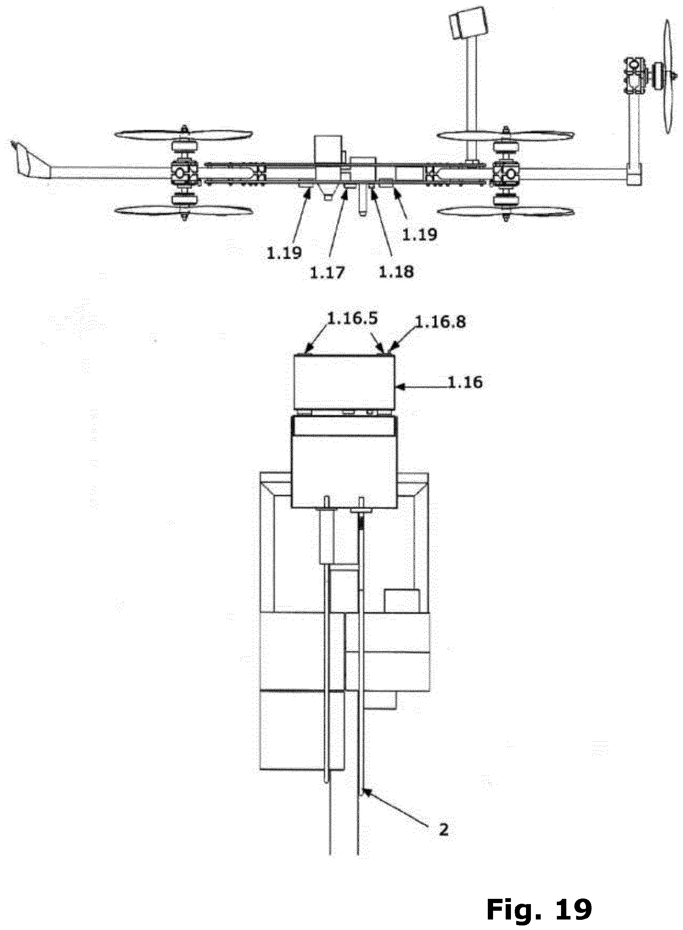

Figure 19 shows how a cleandrone 1 executes a docking manoeuvre to pick up a detachable cargo pack 1.16. Cleandrone 1 has no attached detachable cargo pack 1.16.
1. Cleandrone 1 arrives to ready docking station 2 based on RTK positioning system coordinates.
2. Cleandrone 1 hovers above cargo pack 1.16 parked on landing platform 2.2.
3. Cleandrone 1 uses video from primary downwards looking camera 1.17 in order to recognise visual features 1.16.4 on top of ready cargo pack 1.16.
4. Cleandrone 1 deactivates primary electromagnetic attachment device 1.19.
5. Cleandrone 1 approaches cargo pack 1.16 using a combination of inertial navigation, RTK positioning system, visual recognition and primary downwards looking proximity sensor 1.18 for final rendezvous.
6. When at very close distance and properly aligned to cargo pack 1.16, cleandrone 1 reactivates primary electromagnetic attachment device 1.19 and attaches to cargo pack 1.16.

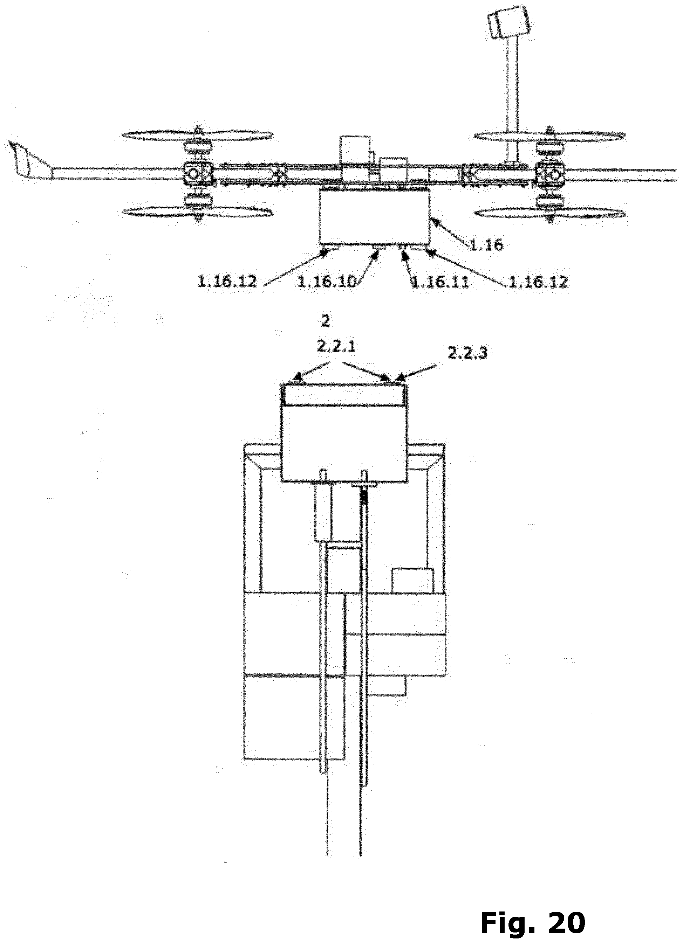

Figure 20 shows how a cleandrone 1 executes a landing manoeuvre to release a detachable cargo pack 1.16. Cleandrone 1 has a detachable cargo pack 1.16 attached to main body 1.1.
1. Cleandrone 1 arrives to docking station 2 based on RTK positioning system coordinates.
2. Cleandrone 1 hovers above free landing platform 2.2.
3. Cleandrone 1 uses video from secondary downwards looking camera 1.16.10 in order to recognise landing visual features 2.2.2 on top of landing platform 2.2.
4. Cleandrone 1 deactivates secondary electromagnetic attachment device 1.16.12.
5. Cleandrone 1 approaches landing platform 2.2 using a combination of inertial navigation, RTK positioning system, visual recognition and secondary downwards looking proximity sensor 1.16.11 for final rendezvous.
6. When at very close distance and properly aligned to landing platform 2.2, cleandrone 1 activates secondary electromagnetic attachment device 1.16.12.
7. Cleandrone 1 deactivates primary electromagnetic attachment device 1.19, releasing detachable cargo pack 1.16.
8. Cleandrone 1 flies upwards drawing power from buffer battery 1.7.
9. Cleandrone 1 reactivates primary electromagnetic attachment device 1.19.
10. Cleandrone 1 flies away.

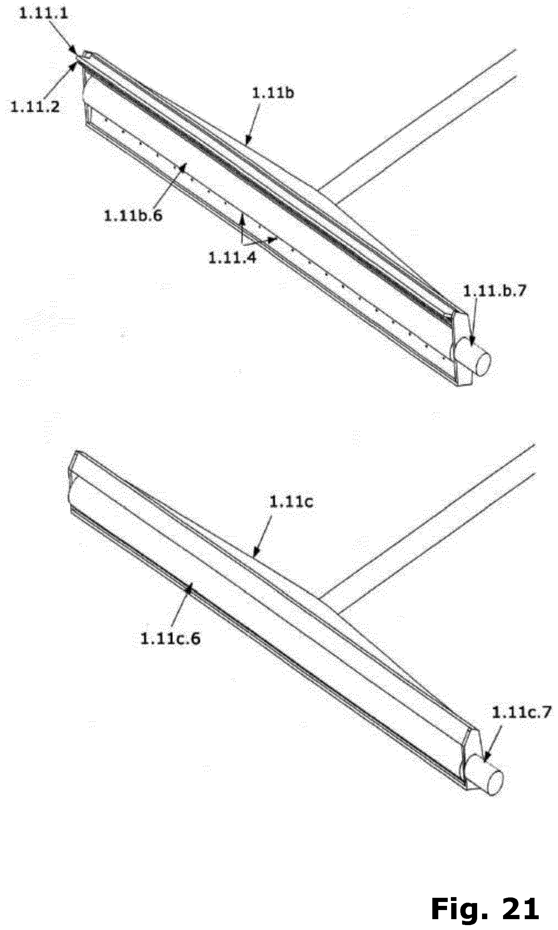

Figure 21 shows two alternative embodiments of cleaning device 1.11. In a first alternative embodiment, cleaning device 1.11b incorporates a whipping device 1.11 b.6 placed between bottom squeegee blade 1.11.2 and spraying nozzles 1.11.4. Whipping device 1.11b.6 consists of a rolling cloth or a rotating cylindrical brush powered by electric motor 1.11b.7. Whipping device 1.11b.6 further helps loosening dirt and can be used for the more demanding cleaning applications.

In a second alternative embodiment which completely avoids water utilization, cleaning device 1.11c is based on a rotating brush 1.11c.6 powered by an electric motor 1.11c.7, eliminating all other cleaning components like top squeegee blade 1.11.1, bottom squeegee blade 1.11.2, air box 1.11.3, spraying nozzles 1.11.4, water line 1.11.5 and also eliminating cleaning solution tank 1.16.2, waste water tank 1.16.3, water pumping system 1.15 and water suction system 1.14. This solution can be used in those cleaning applications in which water consumption is not acceptable at all. In any case, it is obvious that the same basic operating principles of the present disclosure can be used with cleaning devices different to the ones described here as cleaning device 1.11 and alternative cleaning devices 1.11b and 1.11c.

Also, the present invention can be applied to cleaning surfaces other than glass, like PMMA, PC, aluminium mirrors, etc.

Alternative cleaning drone embodiments can be envisaged in which the different cleaning tasks executed by cleandrone 1 in its preferred embodiment are divided between more specialized drones: squeegeeing drone, spraying drone, whipping drone, spraying-whipping drone and whippingsqueegeeing drone. A squeegeeing drone would eliminate from cleandrone 1 the following items: cleaning solution tank 1.16.2, water pumping system 1.15 and spraying nozzles 1.11.4. A spraying drone would eliminate from cleandrone 1 the following items: top squeegee blade 1.11.1, bottom squeegee blade 1.11.2 and air box 1.11.3, water suction system 1.14 and waste water tank 1.16.3. A whipping drone would include whipping device 1.11b.6 and eliminate from cleandrone 1 the following items: cleaning solution tank 1.16.2, water pumping system 1.15, spraying nozzles 1.11.4, top squeegee blade 1.11.1, bottom squeegee blade 1.11.2, air box 1.11.3, water suction system 1.14 and waste water tank 1.16.3. A spraying-whipping drone would include whipping device 1.11b.6 and eliminate from cleandrone 1 the following items: top squeegee blade 1.11.1, bottom squeegee blade 1.11.2 and air box 1.11.3, water suction system 1.14 and waste water tank 1.16.3. A whipping-squeegeeing drone would include whipping device 1.11b.6 and eliminate from cleandrone 1 the following items: cleaning solution tank 1.16.2, water pumping system 1.15 and spraying nozzles 1.11.4.

It can also be seen that cleandrones 1 could accomplish their functions using other power sources rather than an electrochemical battery, like a fuel cell or an internal explosion engine driving an electrical generator. These alternatives would offer higher power densities and may be advantageous in those situations were longer mission times are required.

On cleandrone 1, a fuel tank would replace main batteries 1.16.1 in detachable cargo pack 1.16, and a fuel based electric generator and fuel pump would be added to main body 1.1. On docking station 2, a station fuel tank and means to replenish the drone fuel tank would be added. In this alternative embodiment, ground control system 3 would monitor fuel levels on docking station's fuel tanks and would schedule fuel replenishment maintenance tasks to be executed by human operators 3.3.

Finally, another variation from the preferred embodiment of cleandrone 1 would consist in eliminating detachable cargo pack 1.16 and providing main body 1.1 with internal batteries or fuel tanks and internal cleaning solution and waste water tanks.

## Claims

1. A cleaning drone (1) based on a multi-copter flying platform comprising a plurality of sustentation rotors (1.5), a cleaning device (1.11) protruding from a main body (1.1) of the drone and a plurality of pusher propellers (1.9) protruding from the main body of the done in a position being opposite to the protruding cleaning device, these pusher propellers being aligned at a substantially orthogonal angle in respect to the sustentation rotors in order to provide a pushing force for the cleaning device to act upon the surface to be cleaned, the cleaning drone further comprising a communications system, allowing it to receive commands and to send back responses to a remote controller, a geographical positioning system, allowing it to execute translation operations based on a known position, and a visual recognition system, allowing it to recognise visual features on the surface to be cleaned or on its immediate surroundings, wherein the sustentation rotors and pusher propellers are driven by electric motors (1.4,1.8) which are fed by at least one electricity source .

2. The cleaning drone of claim 1, wherein the at least one electricity source is a power source selected from the group consisting of electric batteries, a fuel cell, a generator driven by a small piston engine, or a thermo-photovoltaic fuel based generator.

3. The cleaning drone of claim 1, wherein the cleaning device is protruding from the front side of the drone's main body and comprises at least two straight flexible squeegee blades (1.11.1, 1.11.2) being hold in place by an enclosure defining a cavity which progressively transforms its cross section from a flat rectangle corresponding to the gap left between the squeegee blades to a duct which connects in its end to a vacuum suction system, whereas at least one but not all of such squeegee blades has notches (1.11.2.1) or holes on it which allow water and dirt to pass through them and be suctioned away by the vacuum suction system.

4. The cleaning drone of claim 3, wherein at least one squeegee blade incorporates a plurality of pressure sensors.

5. The cleaning drone of claim 3 further including a cleaning solution tank (1.16.2), wherein the cleaning device further includes spraying nozzles (1.11.4) mounted below or above the squeegee blades, these nozzles being connected to said cleaning solution tank.

6. The cleaning drone of claim 5, further including a waste water tank (1.16.3) to which the vacuumed water and dirt mixture is disposed, in particular wherein the at least one electricity source is at least one electric battery, in which the main batteries (1.16.1), the cleaning solution tank and the waste water tank are allocated in a detachable cargo pack (1.16), the drone also including a buffer battery (1.7) allowing it to operate when said cargo pack is detached.

7. The cleaning drone of claim 2, wherein the at least one power source is at least one electric battery, in which the main batteries (1.16.1) are allocated in a detachable cargo pack (1.16) and the drone includes also a buffer battery (1.7) allowing it to operate when said cargo pack is detached.

8. A docking station (2) configured to operate with a cleaning drone (1) of claim 1, comprising a power source (2.8, 2.9), a communications system, means for recharging or refilling drone's power source, means for making the cleaning device ready for a new cleaning process including the disposal of recollected dirt material and optionally providing fresh cleaning agents.

9. The docking station of claim 8 further comprising means for allocating a used cargo pack and means for recharging batteries in said cargo pack in order to operate with a cleaning drone of claim 6.

10. The docking station of claim 8 further including a docking station waste water tank (2.3) and a docking station clean solution tank (2.7), means to transfer drone waste water to said docking station waste water tank, means to recycle waste water from the docking station waste water tank and to transfer the recycled water to the docking station clean solution tank, optionally means to dispense and mix cleaning agents into the docking station clean solution tank, and means to refill the drone's cleaning solution from the docking station clean solution tank in order to operate with a cleaning drone of claim 5.

11. The docking station of claim 10, wherein an osmotic filter is used to recycle waste water.

12. The docking station of claim 10 further comprising means for allocating a used cargo pack, means for recharging batteries in the cargo pack, means for emptying the waste water tank in the cargo pack and means for refilling the cleaning solution tank in the cargo pack in order to operate with a cleaning drone of claim 7.

13. A cleaning system comprising one or more drones of claim 1, one or more docking stations of claim 8 and a ground control system (3), said control system being configured to read charging status, current position, and other relevant information from said drones and docking stations, and being configured to send cleaning mission commands to said drones and to coordinate recharging, refuelling, emptying and reloading operations between said drones and said docking stations.

14. The cleaning system of claim 13, wherein said drones and docking stations include Real Time Kinematic receivers (1.6.4 and 2.10) and said ground control system includes a Real Time Kinematic base station (3.4), allowing for centimetric positioning of said drones and docking stations.

15. A cleaning method using a cleaning drone according to claim 5, wherein a cleaning solution is sprayed on the glass surface and then the resulting cleaning solution and dirt particles mixture remaining on the glass surface is vacuumed up by the suction system, this process of spraying, squeegeeing and vacuuming being carried out continuously and simultaneously with a downward or upwards translation of the drone, wherein the translation sense will be upwards when spraying nozzles (1.11.4) are placed above squeegee blades (1.11.1), while translation sense will be downwards when spraying nozzles are placed below squeegee blades.

## Patentansprüche

1. Reinigungsdrohne (1) auf der Basis einer Multicopter-Flugplattform, die eine Vielzahl von Stützrotoren (1.5), eine aus einem Hauptkörper (1.1) der Drohne hervorstehenden Reinigungsvorrichtung (1.11) und eine Vielzahl von Schubpropellern (1.9) umfasst, die aus dem Hauptkörper der Drohne in einer Position hervorstehen, die der hervorstehenden Reinigungsvorrichtung gegenüberliegt, wobei diese Schubpropeller im Wesentlichen in einem orthogonalen Winkel zu den Stützrotoren ausgerichtet sind, um eine Schubkraft für die Reinigungsvorrichtung zu bewirken, die auf die zu reinigende Oberfläche einwirkt, wobei die Reinigungsdrohne ferner ein Kommunikationssystem umfasst, das es ihr ermöglicht, Befehle zu empfangen und Antworten an eine Fernbedienung zurückzusenden, ein geografisches Positionierungssystem, das es ihr ermöglicht, basienrend auf einer bekannten Position Translationsoperationen auszuführen, und ein optisches Erkennungssystem, das es ihr ermöglicht, optische Merkmale auf der zu reinigenden Oberfläche oder in ihrer unmittelbaren Umgebung zu erkennen, wobei die Stützrotoren und Schubpropeller durch Elektromotoren (1.4, 1.8) angetrieben werden, die von mindestens einer Stromquelle gespeist werden.

2. Reinigungsdrohne nach Anspruch 1, wobei die mindestens eine Stromquelle eine Energiequelle ist, die aus der Gruppe bestehend aus Elektrobatterien, einer Brennstoffzelle, einem durch einen kleinen Kolbenmotor angetriebenen Generator oder einem Generator auf der Basis von thermo-photovoltaischem Brennstoff ausgewählt ist.

3. Reinigungsdrohne nach Anspruch 1, wobei die Reinigungsvorrichtung aus der Vorderseite des Hauptkörpers der Drohne hervorsteht und mindestens zwei gerade flexible Wischerblätter (1.11.1, 1.11.2) aufweist, die durch eine Umhüllung an Ort und Stelle gehalten werden, die einen Hohlraum definiert, der seinen Querschnitt schrittweise von einem flachen Rechteck, das der zwischen den Wischerblättern verbleibenden Spalt entspricht, in einen Kanal ändert, der an seinem Ende mit einem Vakuumsaugsystem verbunden ist, während mindestens ein, jedoch nicht alle, derartigen Wischerblätter Kerben (1.11.2.1) oder Löcher daran aufweist, die Wasser und Schmutz durchlassen und durch das Vakuumsaugsystem abgesaugt werden können.

4. Reinigungsdrohne nach Anspruch 3, wobei mindestens ein Wischerblatt eine Vielzahl von Drucksensoren beinhaltet.

5. Reinigungsdrohne nach Anspruch 3, ferner umfassend einen Reinigungslösungstank (1.16.2), wobei die Reinigungsvorrichtung ferner Sprühdüsen (1.11.4) beinhaltet, die unterhalb oder oberhalb den Wischerblättern angebracht sind, wobei diese Düsen mit dem Reinigungslösungstank verbunden sind.

6. Reinigungsdrohne nach Anspruch 5, ferner beinhaltend einen Abwassertank (1.16.3), in den das abgesaugte Wasser-Schmutz-Gemisch entsorgt wird, wobei insbesondere die mindestens eine Stromquelle mindestens eine Elektrobatterie ist, in der die Hauptbatterien (1.16.1), der Reinigungslösungstank und der Abwassertank in einem abnehmbaren Nutzlastpack (1.16) angeordnet sind, wobei die Drohne auch eine Pufferbatterie (1.7) beinhaltet, die ihren Betrieb bei abgenommenem Nutzlastpack ermöglicht.

7. Reinigungsdrohne nach Anspruch 2, wobei die mindestens eine Energiequelle mindestens eine Elektrobatterie ist, in der die Hauptbatterien (1.16.1) in einem abnehmbaren Nutzlastpack (1.16) angeordnet sind und die Drohne außerdem eine Pufferbatterie (1.7) beinhaltet, die ihren Betrieb bei abgenommenem Nutzlastpack ermöglicht.

8. Andockstation (2), die zum Betrieb mit einer Reinigungsdrohne (1) nach Anspruch 1 eingerichtet ist, umfassend eine Energiequelle (2.8, 2.9), ein Kommunikationssystem, Mittel zum Wiederaufladen oder Wiederauffüllen der Energiequelle der Drohne, Mittel zum Vorbereiten der Reinigungsvorrichtung für einen neuen Reinigungsvorgang einschließlich der Entsorgung von aufgefangenem Schmutzmaterial und gegebenenfalls zum Bereitstellen frischer Reinigungsmittel.

9. Andockstation nach Anspruch 8, ferner umfassend Mittel zur Anordnungeines gebrauchten Nutzlastpacks und Mittel zum Wiederaufladen von Batterien im Nutzlastpack, um mit einer Reinigungsdrohne nach Anspruch 6 zu arbeiten.

10. Andockstation nach Anspruch 8, ferner beinhaltend einen Andockstationsabwassertank (2.3) und einen Andockstationstank für saubere Lösung (2.7), Mittel zum Übergeben von Drohnenabwasser in den Andockstationsabwassertank, Mittel zum Recyceln von Abwasser aus dem Andockstationsabwassertank und zum Überführen des recycelten Wassers in den Andockstationstank für saubere Lösung, gegebenenfalls Mittel zum Abgeben und Mischen von Reinigungsmitteln in den Andockstationstank für saubere Lösung und Mittel zum Nachfüllen der Reinigungslösung der Drohne aus dem Andockstationstank für saubere Lösung, um mit einer Reinigungsdrohne nach Anspruch 5 zu arbeiten.

11. Andockstation nach Anspruch 10, wobei ein osmotischer Filter zum Recyceln von Abwasser verwendet wird.

12. Andockstation nach Anspruch 10, ferner umfassend Mittel zur Anordnung eines gebrauchten Nutzlastpacks, Mittel zum Wiederaufladen von Batterien im Nutzlastpack, Mittel zum Entleeren des Abwassertanks im Nutzlastpack und Mittel zum Wiederauffüllen des Reinigungslösungstanks im Nutzlastpack, um mit einer Reinigungsdrohne nach Anspruch 7 zu arbeiten.

13. Reinigungssystem, umfassend eine oder mehrere Drohnen nach Anspruch 1, eine oder mehrere Andockstationen nach Anspruch 8 und ein Bodenkontrollsystem (3), wobei das genannte Kontrollsystem eingerichtet ist, um den Ladestatus, die aktuelle Position und andere relevante Informationen von den Drohnen und Andockstationen zu lesen, und eingerichtet ist, um Reinigungsaufgabenbefehle an die Drohnen zu senden und das Aufladen, Betanken, Entleeren und erneute Beladen zwischen den gennaten Drohnen und den genannten Andockstationen zu koordinieren.

14. Reinigungssystem nach Anspruch 13, wobei die Drohnen und Andockstationen Echtzeit-Kinematikempfänger (1.6.4 und 2.10) beinhalten und das genannte Bodenkontrollsystem eine Echtzeit-Kinematikbasisstation (3.4) beinhaltet, die eine zentimetergenaue Positionierung der genannten Drohnen und Andockstationen ermöglicht.

15. Reinigungsverfahren unter Verwendung einer Reinigungsdrohne nach Anspruch 5, wobei eine Reinigungslösung auf die Glasoberfläche gesprüht wird und dann die resultierende Mischung aus Reinigungslösung und Schmutzpartikeln, die auf der Glasoberfläche verbleibt, durch das Saugsystem aufgesaugt wird, wobei der Vorgang des Sprühens, Wischens und Aufsaugens kontinuierlich und gleichzeitig mit einer Abwärts- oder Aufwärtstranslation der Drohne durchgeführt wird, wobei der Translationsrichtung nach oben gerichtet ist, wenn die Sprühdüsen (1.11.4) über den Wischerblättern (1.11.1) angeordnet sind, während der Translationsrichtung nach unten gerichtet ist, wenn die Sprühdüsen unter den Wischerblättern angeordnet sind.

## Revendications

1. Drone de nettoyage (1) basé sur une plate-forme volante multi-hélicoptères comprenant une pluralité de rotors de sustentation (1.5), un dispositif de nettoyage (1.11) faisant saillie depuis un corps principal (1.1) du drone et une pluralité d'hélices propulsives (1.9) faisant saillie depuis le corps principal du drone dans une position opposée au dispositif de nettoyage en saillie, ces hélices propulsives étant alignées selon un angle sensiblement orthogonal par rapport aux rotors de sustentation afin de fournir une force de poussée pour permettre au dispositif de nettoyage d'agir sur la surface à nettoyer, le drone de nettoyage comprenant en outre un système de communication lui permettant de recevoir des instructions et de renvoyer des réponses à une télécommande, un système de positionnement géographique lui permettant d'exécuter des opérations de translation sur la base d'une position connue, et un système de reconnaissance visuelle, lui permettant de reconnaître les caractéristiques visuelles de la surface à nettoyer ou de son environnement immédiat, dans lequel les rotors de sustentation et les hélices propulsives sont entraînés par des moteurs électriques (1.4, 1.8) alimentés par au moins une source d'électricité.

2. Le drone de nettoyage selon la revendication 1, dans lequel la au moins une source d'électricité est une source d'énergie choisie dans le groupe comprenant des batteries électriques, une pile à combustible, un générateur entraîné par un petit moteur à piston ou un générateur à base de carburant thermo-photovoltaïque.

3. Le drone de nettoyage selon la revendication 1, dans lequel le dispositif de nettoyage fait saillie depuis la face frontale du corps principal du drone et comprend au moins deux lames de raclette souples et droites (1.11.1, 1.11.2) maintenues en place par une enceinte définissant une cavité qui transforme progressivement sa section transversale depuis un rectangle plat correspondant à l'espace laissé entre les lames de raclette jusqu'à un conduit qui se raccorde par son extrémité à un système d'aspiration sous vide, alors qu'au moins une de ces lames de raclette, mais pas toutes, comporte sur elle des encoches (1.11.2.1) ou des trous permettant à l'eau et aux impuretés de les traverser et d'être éliminées par aspiration par le système d'aspiration sous vide.

4. Le drone de nettoyage selon la revendication 3, dans lequel au moins une lame de raclette incorpore une pluralité de capteurs de pression.

5. Le drone de nettoyage selon la revendication 3, comprenant en outre un réservoir de solution de nettoyage (1.16.2), dans lequel le dispositif de nettoyage comprend en outre des buses de pulvérisation (1.11.4) montées au-dessous ou au-dessus des lames de raclette, ces buses étant connectées audit réservoir de solution de nettoyage.

6. Le drone de nettoyage selon la revendication 5, comprenant en outre un réservoir d'eaux usées (1.16.3) dans lequel est disposé le mélange d'eau et d'impuretés aspiré, en particulier dans lequel la au moins une source d'électricité est au moins une batterie électrique, dans laquelle les batteries principales (1.16.1), le réservoir de solution de nettoyage et le réservoir d'eaux usées sont attribués dans un emballage de cargaison détachable (1.16), le drone comprenant également une batterie tampon (1.7) lui permettant de fonctionner lorsque ledit emballage de cargaison est détaché.

7. Le drone de nettoyage selon la revendication 2, dans lequel la au moins une source d'énergie est au moins une batterie électrique, dans laquelle les batteries principales (1.16.1) sont attribuées dans un emballage de cargaison détachable (1.16) et le drone comprend également une batterie tampon (1.7) lui permettant de fonctionner lorsque ledit emballage de cargaison est détaché.

8. Une station d'accueil (2) conçue pour fonctionner avec un drone de nettoyage (1) selon la revendication 1, comprenant une source d'énergie (2.8, 2.9), un système de communication, un moyen pour recharger ou remplir la source d'énergie du drone, un moyen pour préparer le dispositif de nettoyage pour un nouveau processus de nettoyage, y compris l'élimination des impuretés récupérées et la fourniture éventuelle d'agents de nettoyage frais.

9. La station d'accueil selon la revendication 8, comprenant en outre un moyen pour attribuer un emballage de cargaison usé et un moyen pour recharger les batteries dans ledit emballage de cargaison afin de fonctionner avec un drone de nettoyage selon la revendication 6.

10. La station d'accueil selon la revendication 8, comprenant en outre un réservoir d'eaux usées de station d'accueil (2.3) et un réservoir de solution propre de station d'accueil (2.7), un moyen pour transférer les eaux usées du drone vers ledit réservoir d'eaux usées de station d'accueil, un moyen pour recycler les eaux usées provenant du réservoir d'eaux usées de station d'accueil et transférer l'eau recyclée dans le réservoir de solution propre de station d'accueil, éventuellement un moyen pour distribuer et mélanger des agents de nettoyage dans le réservoir de solution propre de station d'accueil et un moyen pour recharger la solution de nettoyage du drone à partir du réservoir de solution propre de station d'accueil afin de fonctionner avec un drone de nettoyage selon la revendication 5.

11. La station d'accueil selon la revendication 10, dans laquelle un filtre osmotique est utilisé pour recycler les eaux usées.

12. La station d'accueil selon la revendication 10, comprenant en outre un moyen pour attribuer un emballage de cargaison usé, un moyen pour recharger les batteries dans l'emballage de cargaison, un moyen pour vider le réservoir d'eaux usées dans l'emballage de cargaison et un moyen pour remplir le réservoir de solution de nettoyage dans l'emballage de cargaison afin de fonctionner avec un drone de nettoyage selon la revendication 7.

13. Un système de nettoyage comprenant un ou plusieurs drones selon la revendication 1, une ou plusieurs stations d'accueil selon la revendication 8 et un système de commande au sol (3), ledit système de commande étant configuré pour lire l'état de charge, la position actuelle et d'autres informations pertinentes provenant desdits drones et stations d'accueil et étant configuré pour envoyer des instructions de mission de nettoyage auxdits drones et pour coordonner les opérations de recharge, de ravitaillement de carburant, de vidange et de rechargement entre lesdits drones et lesdites stations d'accueil.

14. Le système de nettoyage selon la revendication 13, dans lequel lesdits drones et stations d'accueil comprennent des récepteurs Cinématiques en Temps Réel (1.6.4 et 2.10) et ledit système de commande au sol comprend une station de base Cinématique en Temps Réel (3.4) permettant le positionnement centimétrique desdits drones et stations d'accueil.

15. Un procédé de nettoyage utilisant un drone de nettoyage selon la revendication 5, dans lequel une solution de nettoyage est pulvérisée sur la surface du verre, puis le mélange de solution de nettoyage et de particules d'impureté résultant restant sur la surface du verre est aspiré par le système d'aspiration, ce processus de pulvérisation, raclage et aspiration étant effectué de manière continue et simultanée avec une translation du drone vers le bas ou vers le haut, où le sens de la translation sera vers le haut lorsque les buses de pulvérisation (1.11.4) sont placées au-dessus des lames de raclette (1.11.1), tandis que le sens de la translation sera vers le bas lorsque les buses de pulvérisation sont placées sous les lames de raclette.
